(19) Europäisches Patentamt

European Patent Office

Office européen des brevets

(11) **EP 4 546 632 A1**

(12) **EUROPEAN PATENT APPLICATION**
published in accordance with Art. 153(4) EPC

(43) Date of publication:
**30.04.2025  Bulletin 2025/18**

(21) Application number: **23827342.9**

(22) Date of filing: **10.04.2023**

(51) International Patent Classification (IPC):
*H02M 3/157* (2006.01)  *H02M 3/158* (2006.01)
*H02M 1/00* (2006.01)  *H02M 1/42* (2007.01)

(52) Cooperative Patent Classification (CPC):
**H02M 1/00; H02M 1/42; H02M 3/157; H02M 3/158**

(86) International application number:
**PCT/KR2023/004809**

(87) International publication number:
**WO 2023/249222 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **23.06.2022  KR 20220077082**

(71) Applicant: **Samsung Electronics Co., Ltd.
Suwon-si, Gyeonggi-do 16677 (KR)**

(72) Inventors:
• **AHN, Hyomin**
  **Suwon-si, Gyeonggi-do 16677 (KR)**
• **KIM, Junseok**
  **Suwon-si, Gyeonggi-do 16677 (KR)**
• **PARK, Youngjae**
  **Suwon-si, Gyeonggi-do 16677 (KR)**
• **CHO, Jehyung**
  **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **DIGITAL CONTROL METHOD FOR INTERLEAVED BOOST-TYPE POWER FACTOR CORRECTION CONVERTER, AND DEVICE THEREFOR**

(57)    A power control device for power factor correction includes a rectifier rectifying an input current, a first switch and a second switch connected to an output of the rectifier to control a phase of the output of the rectifier, a first current sensor sensing a current through the first switch and a second current sensor sensing a current through the second switch, a low pass filter filtering the currents sensed by the first current sensor and the second current sensor, and at least one processor sampling the currents filtered by the low pass filter once per entire switching cycle of the first switch and the second switch and performing balancing control based on the sampled currents such that an average value of the current through the first switch and the current through the second switch is uniform for a certain period.

FIG. 5

## Description

Technical Field

Embodiments of the present disclosure relate to a method of performing high-precision current balancing control while simplifying current sampling in a power control device including an interleaved boost power factor correction (PFC) converter performing digital control and a power control device using the method.

Background Art

For all electric appliances including home appliances, reducing power loss and optimizing power efficiency may be advantageous for power consumption. Also, because electric appliances such as power control devices are driven at high switching frequencies, reducing the amount of control that a microcomputer digitally controlling switching of a power control device has to manage may be beneficial in terms of cost competitiveness of the power control device as use of a high-performance microcomputer by the power control device becomes unnecessary.

Disclosure

Technical Solution

According to an embodiment of the present disclosure, a power control device capable of performing current control includes a rectifier configured to rectify an input current, a first switch and a second switch connected to an output of the rectifier to control a phase of the output of the rectifier, a first current sensor configured to sense a current through the first switch and a second current sensor configured to sense a current through the second switch, a low pass filter configured to filter the current sensed by the first current sensor and the current sensed by the second current sensor, and at least one processor configured to sample the currents filtered by the low pass filter once per entire switching cycle of the first switch and the second switch and perform balancing control based on the sampled currents such that an average value of the current through the first switch and the current through the second switch is uniform for a certain period.

According to an embodiment of the present disclosure, a method of performing current control in a power control device includes rectifying, by a rectifier, an input current of a system including the power control device, sensing, by a current sensor, a current through each of a first switch and a second switch connected to an output of the rectifier, filtering the sensed currents through a low pass filter, sampling, by at least one processor, the filtered current once per switching cycle of the first switch and the second switch, and performing balancing control based on the sampled current such that an average value of the current through the first switch and the current through the second switch is uniform for a certain period.

Description of Drawings

FIG. 1 is a circuit diagram of a power control device including a power factor correction (PFC) circuit.
FIG. 2 is a circuit diagram including an interleaved boost PFC power control device according to an embodiment of the present disclosure.
FIG. 3A is a circuit diagram illustrating an interleaved boost PFC power control device according to an embodiment of the present disclosure.
FIG. 3B is a block diagram illustrating a controller of an interleaved boost PFC power control device according to an embodiment of the present disclosure.
FIG. 3C is a block diagram of a balancing controller according to an embodiment of the present disclosure.
FIG. 4 is a circuit diagram illustrating an interleaved boost PFC power control device according to an embodiment of the present disclosure.
FIG. 5 is a circuit diagram of a power control device and a detailed block diagram of a controller according to an embodiment of the present disclosure.
FIG. 6 is a circuit diagram of a power control device and a block diagram of a controller according to an embodiment of the present disclosure.
FIG. 7 is a circuit diagram for balancing control according to an embodiment of the present disclosure.
FIGS. 8A to 8D are waveforms illustrating current sampling during an operation of a switch included in a PFC circuit according to an embodiment of the present disclosure.
FIGS. 9A and 9B are current waveform diagrams during phase shedding control according to an embodiment of the present disclosure.

FIG. 10A is a circuit diagram of a rectifier using a silicon controlled rectifier (SCR) according to an embodiment of the present disclosure.

FIGS. 10B to 10D are waveform diagrams illustrating a charge operation in a rectifier using an SCR according to an embodiment of the present disclosure.

FIG. 11 illustrates a power control device including a harmonic controller according to an embodiment of the present disclosure.

FIG. 12 illustrates a waveform of a current shape command output reflecting a non-conducting period according to an embodiment of the present disclosure.

FIG. 13 is a block diagram of a power control device according to an embodiment of the present disclosure.

FIG. 14 is a flowchart of a balancing control method according to an embodiment of the present disclosure.

Mode for Invention

Terms used herein will be briefly described and then embodiments of the present disclosure will be described in detail.

The terms used herein are those general terms currently widely used in the art in consideration of functions in embodiments of the present disclosure, but the terms may vary according to the intentions of those of ordinary skill in the art, precedents, or new technology in the art. Also, in some cases, there may be terms that are optionally selected by the applicant, and the meanings thereof will be described in detail in the corresponding embodiment of the present disclosure. Thus, the terms used herein should be understood not as simple names but based on the meanings of the terms and the overall description of the present disclosure.

Throughout the present disclosure, when something is referred to as "including" an element, one or more other elements may be further included unless specified otherwise. Also, as used herein, the terms such as "units" and "modules" may refer to units that perform at least one function or operation, and the units may be implemented as hardware or software or a combination of hardware and software.

Hereinafter, embodiments of the present disclosure will be described in detail with reference to the accompanying drawings so that those of ordinary skill in the art may easily implement the present disclosure. However, embodiments of the present disclosure may be embodied in many different forms and should not be construed as being limited to the embodiments set forth herein. Also, portions irrelevant to the description of the present disclosure will be omitted in the drawings for a clear description of embodiments of the present disclosure, and like reference numerals will denote like elements throughout the present disclosure.

In a system including electric appliances, when an interleaved power factor control power control device performs current balancing control by sensing a switch conduction current in each leg, a method capable of performing balancing control by performing minimum current sampling may be required.

According to an embodiment of the present disclosure, a power control device includes a rectifier configured to rectify an input current, a first switch and a second switch connected to an output of the rectifier to control a phase of the output of the rectifier, a first current sensor configured to sense a current through the first switch and a second current sensor configured to sense a current through the second switch, a low pass filter configured to filter the current sensed by the first current sensor and the current sensed by the second current sensor, and at least one processor configured to sample the currents filtered by the low pass filter once per entire switching cycle of the first switch and the second switch and perform balancing control based on the sampled currents such that an average value of the current through the first switch and the current through the second switch is uniform for a certain (predetermined) period.

According to an embodiment, in the power control device, a current value of the current filtered by the low pass filter may have a uniform value within a certain (predetermined) deviation value in the switching cycle.

According to an embodiment, in the power control device, the at least one processor may be further configured to perform power factor correction according to the balancing control.

According to an embodiment, in the power control device, the at least one processor may be further configured to simultaneously obtain an average value per switching cycle of a current flowing through the first switch and a current flowing through the second switch by sampling the filtered current once per switching cycle of the first switch and the second switch.

According to an embodiment, the power control device may further include an output current sensor configured to sense an output current of the rectifier, a direct current (DC) link capacitor configured to smooth an output voltage of the rectifier, and a voltage sensor configured to sense a voltage across the DC link capacitor, wherein the output current of the rectifier and the voltage across the DC link capacitor may be input to a controller, and the at least one processor may control switching of the first switch and the second switch through an output of the controller.

According to an embodiment, the power control device may further include an input current sensor configured to detect the input current, wherein the at least one processor may be further configured to obtain a harmonic component from the input current detected by the input current sensor, determine a non-conducting period size of the first switch and the second switch such that the obtained harmonic component is less than a certain harmonic reference value, and generate a current command value corresponding to the determined non-conducting period size.

According to an embodiment, in the power control device, the generating of the current command value corresponding to the determined non-conducting period size may include outputting a current shape command value corresponding to the current command value based on the determined non-conducting period and a phase difference between the input current and an input voltage of a system.

According to an embodiment, in the power control device, the at least one processor may be further configured to perform control such that the obtained harmonic component is less than a certain harmonic reference value and the non-conducting period size of the first switch and the second switch is maximized.

According to an embodiment, the power control device may further include a DC link capacitor configured to smooth an output voltage of the rectifier, and a power factor correction (PFC) converter including at least two legs connected in parallel to the DC link capacitor, wherein one of the at least two legs may include the first switch and another one may include the second switch, and the at least one processor may be further configured to randomly select at least one of the at least two legs and turn on/off the first switch or the second switch included in the randomly-selected at least one leg according to a pulse width modulation (PWM) switching signal.

According to an embodiment, the power control device may further include a DC link capacitor configured to smooth an output voltage of the rectifier, and a PFC converter including at least two legs connected in parallel to the DC link capacitor, wherein one of the at least two legs may include the first switch and another leg may include the second switch, and the at least one processor may be further configured to sequentially select the at least two legs and turn on/off the first switch or the second switch included in the selected at least one leg among the at least two legs according to a PWM switching signal.

According to an embodiment, in the power control device, the sampling of the current filtered by the low pass filter once per switching cycle of the first switch and the second switch may include sampling the current at any point in the switching cycle.

According to an embodiment, in the power control device, a cutoff frequency of the low pass filter may be set to be 1/10 or less of a switching frequency of the first switch or the second switch.

According to an embodiment, the power control device may further include a DC link capacitor configured to smooth an output voltage of the rectifier, wherein at least a portion of the rectifier may include a switching device, wherein the at least one processor may be further configured to control the switching device of the rectifier to gradually increase a size of a charge voltage charged into the DC link capacitor when a system including the power control device operates.

According to an embodiment, in the power control device, at least a portion of the switching device of the rectifier may include a thyristor.

According to an embodiment of the present disclosure, a current control method of a power control device includes rectifying, by a rectifier, an input current of a system including the power control device, sensing, by a current sensor, a current through each of a first switch and a second switch connected to an output of the rectifier, filtering the sensed currents through a low pass filter, sampling, by at least one processor, the filtered current once per switching cycle of the first switch and the second switch, and performing balancing control based on the sampled current such that an average value of the current through the first switch and the current through the second switch is uniform for a certain period.

According to an embodiment, in the current control method of the power control device, a current value of the current filtered by the low pass filter may have a uniform value within a certain (predetermined) deviation value in the switching cycle.

According to an embodiment, in the current control method of the power control device, the sampling of the filtered current once per switching cycle of the first switch and the second switch may include simultaneously obtaining an average value per switching cycle of a current flowing through the first switch and a current flowing through the second switch by sampling the filtered current once per switching cycle of the first switch and the second switch.

According to an embodiment, the current control method of the power control device may further include sensing an output current of the rectifier, sensing a voltage across a DC link capacitor, and inputting the output current of the rectifier and the voltage across the DC link capacitor to a controller and controlling switching of the first switch and the second switch through an output of the controller.

According to an embodiment, the current control method of the power control device may further include detecting the input current, obtaining a harmonic component from the detected input current, determining a non-conducting period size of the first switch and the second switch such that the obtained harmonic component is less than a certain harmonic reference value, and generating a current command value corresponding to the determined non-conducting period size.

According to an embodiment, in the current control method of the power control device, the generating of the current command value corresponding to the determined non-conducting period size may include outputting a current shape command value corresponding to the current command value based on the determined non-conducting period and a phase difference between the input current and an input voltage of the system.

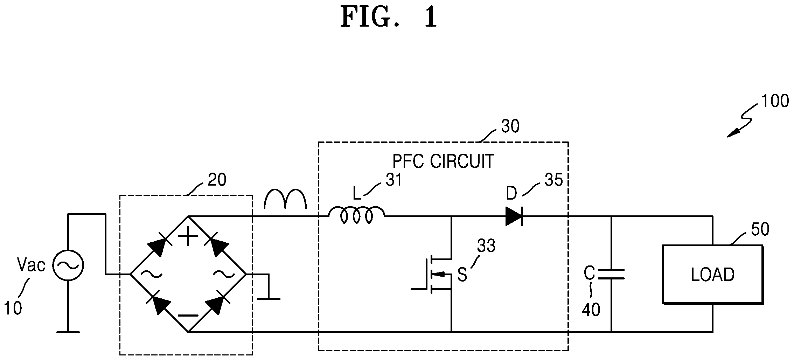

FIG. 1 is a circuit diagram of a power control device including a PFC circuit.

FIG. 1 illustrates a power control device 100 including a PFC circuit. The power control device 100 may include an input power supply 10, a rectifier 20, a PFC circuit 30, and a DC link capacitor 40. The power control device 100 may be connected to a load 50 to manage the load 50 while consuming power according to the load 50. The PFC circuit 30 may include an inductor 31, a switch 33, and a diode 35. In the PFC circuit 30, when the inductance of the inductor 31 increases, a surge current may decrease in the non-switching period of the switch 33 but the volume of a system may increase. On the other hand, in the PFC circuit 30, when the inductance of the inductor 31 decreases, a surge current may increase in the non-switching period of the switch 33 and as a result, the power control device 100 may not satisfy the harmonic standard. Thus, active control of the PFC circuit 30 that satisfies the harmonic standard while reducing the inductance of the inductor 31 may be required. According to an embodiment, the PFC circuit 30 may also generally include the rectifier 20, but it is separately illustrated in FIG. 1. The switch 33 of the PFC circuit 30 may use an active switch element. The switch 33 may include an insulated gate bipolar transistor (IGBT), a transistor, or a metal oxide semiconductor field effect transistor (MOSFET); however, the present disclosure is not limited thereto.

Throughout the present disclosure, an "interleaved boost PFC power control device" may be simply referred to as a "power control device".

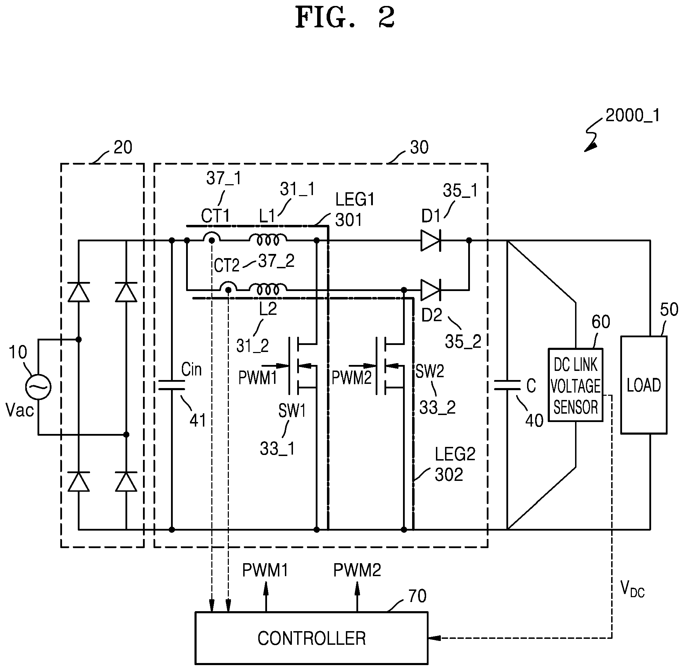

FIG. 2 is a circuit diagram of an interleaved boost PFC power control device according to an embodiment of the present disclosure.

When a PFC power control device is configured as an interleaved boost PFC power control device 2000_1 as in FIG. 2, because an input/output current ripple may be reduced, the size of a DC link capacitor 40 and an input capacitor ($C_{in}$) 41 may be reduced and the efficiency thereof may be improved. However, a current imbalance between legs may occur due to the heat dissipation performance difference and physical deviation of each leg including a switch and an inductor provided for an interleave operation in the interleaved boost PFC power control device 2000_1. In other words, when a stress is concentrated on one leg, the durability of the entire interleaved boost PFC power control device 2000_1 may be degraded, leading to a reduced lifetime. Thus, in order to solve the current imbalance problem between the legs, a current balancing control technique may be applied to minimize the imbalance between the legs.

A controller 70 may detect a current flowing through each leg and perform current balancing control to balance the current between the respective legs. Balancing control may mean current balancing control that balances the current flowing through each leg. Balancing control may mean controlling the DC component or average value of the currents flowing through a first leg 301 and a second leg 302 to be uniform or substantially uniform for each switching cycle of switches 33_1 and 33_2 included in the respective legs. Thus, the controller 70 may detect a current flowing through the first leg 301 and a current flowing through the second leg 302 through current sensors (CT1 and CT2) 37_1 and 37_2 and detect a voltage across the DC link capacitor 40 through a DC link voltage sensor 60, receive the detection results as an input, and output, based on the input, gate signals PWM1 and PWM2 to a first switch (SW1) 33_1 of the first leg 301 and a second switch (SW2) 33_2 of the second leg 302 such that the currents flowing through the respective legs are balanced with each other.

According to an embodiment, the input power supply 10 may be an alternating current (AC) power supply through a power supply line connected to a power outlet. According to an embodiment, the input power supply 10 may be a receiving device that wirelessly receives AC power from a station (not illustrated) according to wireless power transmission.

The current sensors (CT1 and CT2) 37_1 and 37_2 may respectively sense the currents flowing through the first leg 301 and the second leg 302 and transmit the sensed current information to the input of the controller 70.

The voltage harmonic-controlled through the PFC circuit 30 may be smoothed by the DC link capacitor 40 and supplied to the load 50. A DC link voltage $V_{DC}$ sensed by the DC link voltage sensor 60 and the current flowing through each of the first leg 301 and the second leg 302 sensed by each of the current sensors 37_1 and 37_2 may all be used as an input of the controller 70.

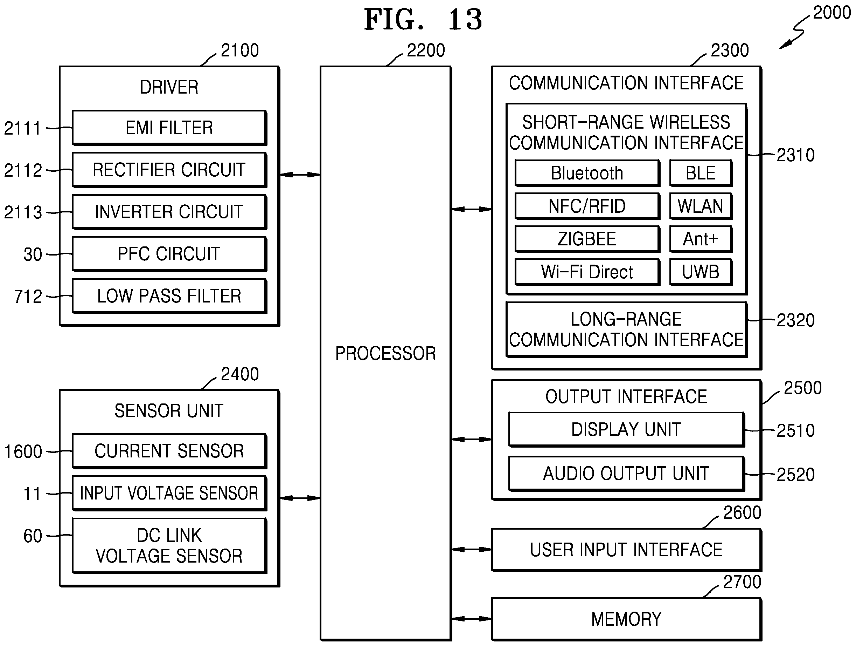

In an embodiment, the controller 70 may be a place where control processing is performed by a processor (not illustrated) included in the interleaved boost PFC power control device 2000_1. A block diagram of an interleaved boost PFC power control device including a controller 70 including a processor will be described below with reference to FIG. 13.

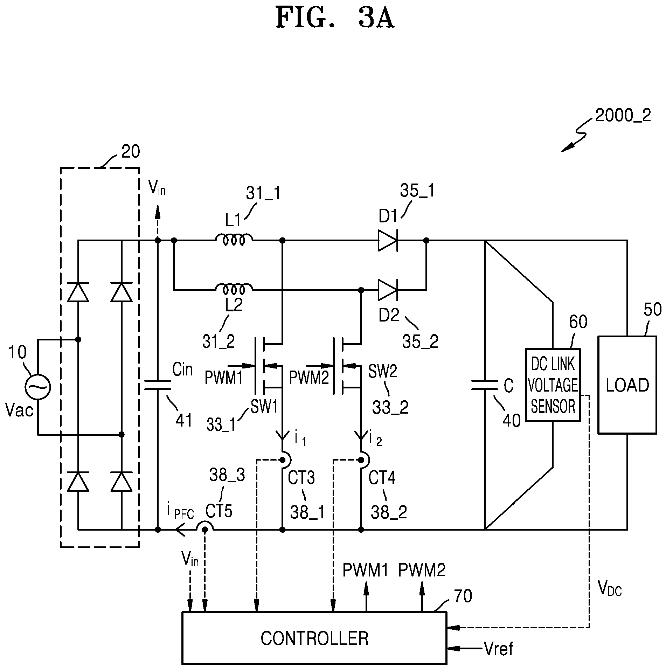

FIG. 3A is a circuit diagram illustrating an interleaved boost PFC power control device 2000_2 according to an embodiment of the present disclosure.

Unlike the interleaved boost PFC power control device 2000_1 of FIG. 2, the interleaved boost PFC power control device 2000_2 of FIG. 3A may have an advantage in that the current detection of each leg may be performed not in front of a switch (33_1 and 33_2) or an inductor (31_1 and 31_2) but in back of the switch (33_1 and 33_2) to prevent the potential of a current sensor (38_1, 38_2) from becoming a floating potential.

Thus, a controller 70 of the interleaved boost PFC power control device 2000_2 of FIG. 3A may sense a current $i_1$ flowing through a first switch (SW1) 33_1 through a current sensor (CT3) 38_1 and receive the same as an input, and may

sense a current $i_2$ flowing through a second switch (SW2) 33_2 through a current sensor (CT4) 38_2 and receive the same as an input. Also, the controller 70 may sense a current $i_{PFC}$ flowing through a rectifier 20 through a current sensor (CT5) 38_3 of the interleaved boost PFC power control device 2000_2 and receive the same as an input. Also, the controller 70 may receive, as an input, a voltage value $V_{DC}$ sensed as a voltage across the DC link capacitor 40 through the DC link voltage sensor 60. When necessary, the controller 70 may sense a voltage Vin across an input voltage capacitor (Cin) 41 and/or an input voltage Vac of an input power supply 10 and receive the same as an input.

The controller 70 may calculate, based on the received input parameters $i_1$, $i_2$, $i_{PFC}$, and $V_{DC}$, a current command value (or a voltage command value) to be input to the first switch 33_1 and the second switch 33_2 through a digital controller and transmit gate signals PWM1 and PWM2 to the respective switches 33_1 and 33_2. Additional input parameters of the controller 70 may further include a voltage Vin across the input voltage capacitor (Cin) 41 and/or an input voltage Vac of the input power supply 10.

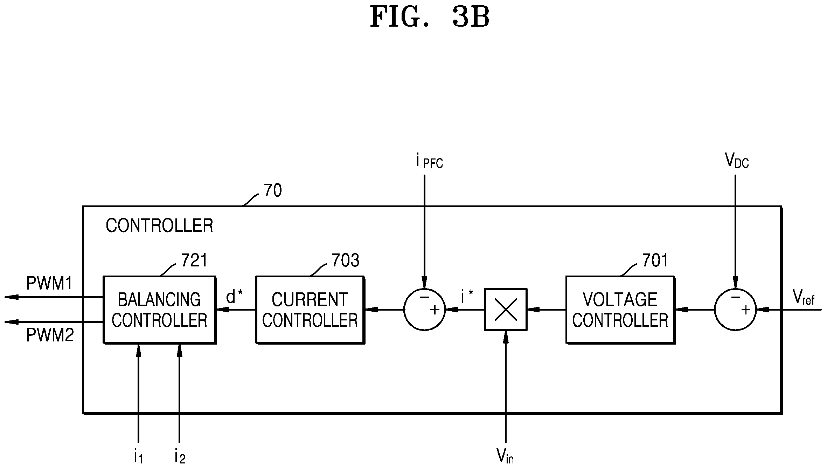

FIG. 3B is a block diagram illustrating at least a portion of the controller 70 of the interleaved boost PFC power control device 2000_2 according to an embodiment of the present disclosure. A voltage controller 701 and a current controller 703 of FIG. 3B may use a PI controller; however, the present disclosure is not limited thereto and a P controller or a PID controller may also be used.

The controller 70 may perform a control operation by inputting a difference value between $V_{DC}$ and a voltage command Vref to the voltage controller 701. When a current command i* is generated by multiplying the output of the voltage controller 701 and the detected input voltage Vin and a difference value between the generated current command i* and $i_{PFC}$ is input to the current controller 703, the current controller 703 may output a switching duty command d* of the first switch 33_1 and the second switch 33_2. When the currents $i_1$ and $i_2$ of the respective legs are received as an input and switching is performed to generate a PWM signal according to the switching duty command d*, a balancing controller 721 may perform control such that the currents generated by the first switch 33_1 and the second switch 33_2 are balanced with each other. PWM1 and PWM2 signals may be PWM signals that are finally output to the first switch 33_1 and the second switch 33_2 respectively according to the balancing control result according to the operation of the balancing controller 721.

There may be various methods of performing balancing control in the interleaved boost power control device 2000_2, but an example thereof will be described below.

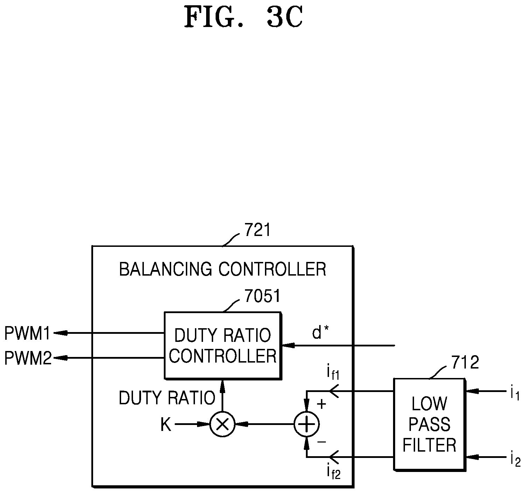

FIG. 3C is a block diagram of a balancing controller according to an embodiment of the present disclosure.

As an example for current balancing control, an input current may be set to follow an input voltage in the interleaved boost power control device 2000_2. Two PWM1 and PWM2 signals output by the balancing controller 721 may have the same duty ratio but may drive two boost stages with their directions changed by 180 degrees. Referring to FIG. 3C, the currents $i_1$ and $i_2$ sensed by the current sensors (CT3 and CT4) 38_1 and 38_2 in the balancing controller 721 may be filtered through a low pass filter 712 and then sampled and compared with each other. In this case, according to an embodiment of the present disclosure, because the currents $i_1$ and $i_2$ have passed through the low pass filter, the filtered currents $i_{f1}$ and $i_{f2}$ may have a uniform value or at least a value within a certain minimum error value during the switching cycle of the first switch 33_1 and the second switch 33_2 respectively. For example, during one switching cycle, $i_1$ may change linearly from 1.5 [A] to 2.5 [A] based on the root mean square (rms) value, but the filtered current $i_{f1}$ may be filtered to have a value between 2.0 [A] and 2.05 [A] and thus it may be said to have a substantially uniform value during one switching cycle. Likewise, $i_2$ may change linearly, for example, from 1.7 [A] to 2.7 [A] based on the rms value, but the filtered current $i_{f2}$ may be filtered to have a value between 2.20 [A] and 2.24 [A] and thus it may be said to have a substantially uniform value during one switching cycle. Thus, both the current values $i_{f1}$ and $i_{f2}$ for balancing control may be obtained by performing one sampling without having to perform several samplings in the entire switching cycle of the first switch 33_1 and the second switch 33_2.

A microcomputer or a processor may calculate a difference value between the filtered currents $i_{f1}$ and $i_{f2}$ and then multiply the same by a gain K value and adjust the duty ratio through a duty ratio controller 7051 by using the multiplier output (multiplier) to turn on/off the gate of each switch by a PWM signal according to the adjusted duty ratio of the first switch 33_1 and the second switch 33_2. For example, as in the above example, because the filtered current $i_{f2}$ of the second leg 302 is 2.2 [A] and the filtered current $i_{f1}$ of the first leg 301 is 2.0 [A], when the second leg 302 has a higher current, the error between the two currents may be negative (-). The negative multiplier output may increase the duty cycle for switching the first switch 33_1 on the first leg 301 and thus the current $i_1$ may also increase. In this way, current balancing control may be performed.

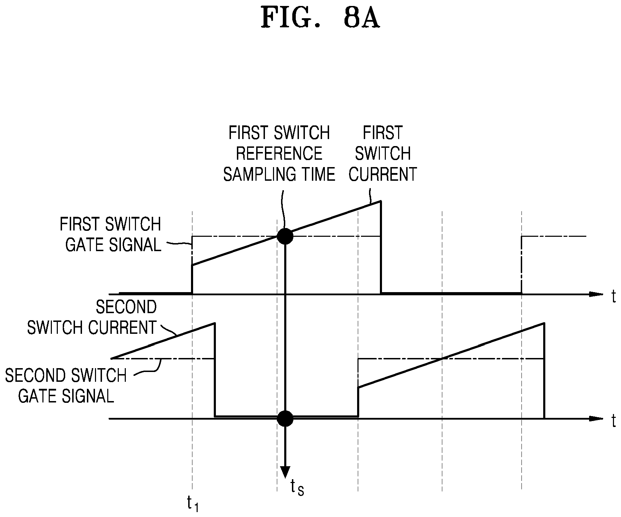

For precise balancing control, it may be important to accurately sample the sizes of two currents $i_1$ and $i_2$. In general, because the output of a current transformer (CT) that is a current sensor is a sawtooth wave, both the currents may be sampled at the same point to enable a correct comparison for current balancing. The current sampling will be described in detail with reference to FIGS. 8A to 8D.

FIGS. 8A to 8D are waveforms illustrating current sampling during an operation of a switch included in a PFC circuit according to an embodiment of the present disclosure.

Referring to FIG. 8A, a gate signal of the first switch 33_1 and a current $i_1$ flowing through the first switch 33_1 sensed by the CT3 38_1 are illustrated. Because the current $i_1$ starts to increase linearly from a time t1 when the gate of the first switch 33_1 is turned on, the value of the current $i_1$ may vary at each sampling time during the period in which the first switch 33_1 is turned on. Thus, in order to obtain the value of the current $i_1$ flowing during the turn-on period of the first switch 33_1 in the switching cycle of the first switch 33_1, that is, the average value of the current $i_1$, the current $i_1$ may be sampled several times during the turn-on period of the first switch 33_1. Alternatively, in order to sample an accurate current value flowing through the switch, the average value of the current $i_1$ value in the corresponding switching cycle may be determined, for example, by sampling the current $i_1$ once at the turn-on time of the first switch 33_1, sampling the current $i_1$ once again at the turn-off time of the first switch 33_1, and calculating the average of the two sampled current values. However, because all of these methods sample the current $i_1$ several times in one switching cycle, the calculation amount of the microcomputer (or processor) included in the power control device may increase.

Referring to FIG. 8A, the microcomputer of the power control device may sample a current $i_1$ flowing through the first switch 33_1 and a current $i_2$ flowing through the second switch 33_2 at a time ts. At the time ts, because the first switch 33_1 is turned on but the second switch 33_2 is turned off, the current value corresponding to the current $i_1$ may be sampled; however, because the value of the current $i_2$ is '0', it may not be said to be the result of precisely sampling all the current values of the respective legs.

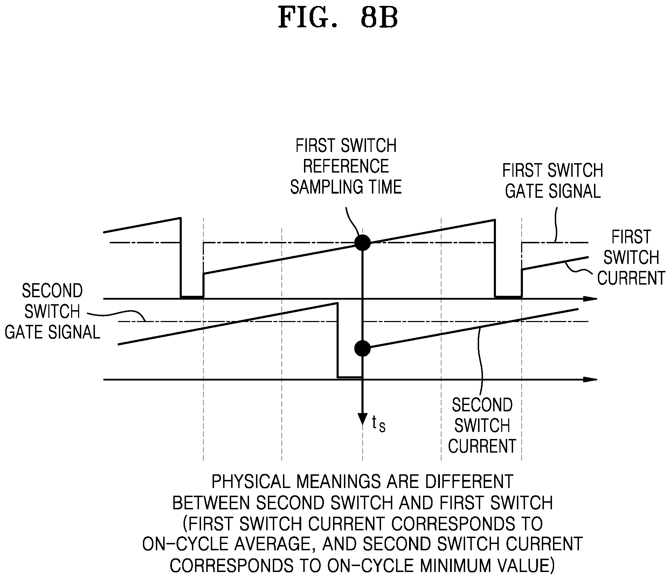

Referring to FIG. 8B, unlike in FIG. 8A, the current value corresponding to the current $i_1$ may be sampled and the current value corresponding to the current $i_2$ may also be sampled. However, the sampled current value corresponding to the current $i_1$ may be considered as an average value of the current value during the turn-on period of the first switch 33_1, but the sampled current value corresponding to the current $i_2$ may correspond to a minimum value of the current value during the turn-on period of the second switch 33_2. Thus, like in FIG. 8A, in the case of the current sampling of FIG. 8B, it may not be said to be the result of precisely sampling the current value flowing through each switch.

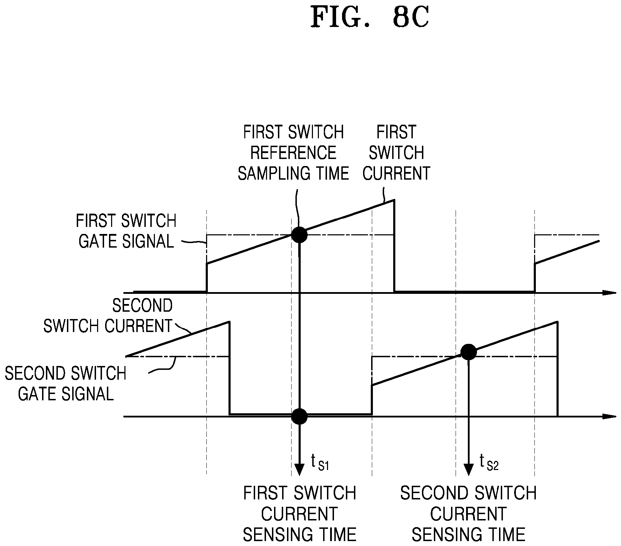

Referring to FIG. 8C, the microcomputer of the power control device may sample a current $i_1$ at a time ts1 corresponding to the average value of the current value during the turn-on period of the first switch 33_1 and sample a current $i_2$ at a time ts2 corresponding to the average value of the current value during the turn-on period of the second switch 33_2. The sampling method of FIG. 8C may be said to be a method of most precisely sampling the current $i_1$ and the current $i_2$, compared to FIGS. 8A and 8B. However, in the case of FIG. 8C, because the first switch 33_1 and the second switch 33_2 are separately sampled, the sampling operation amount may increase and thus a high-performance microcomputer should be used.

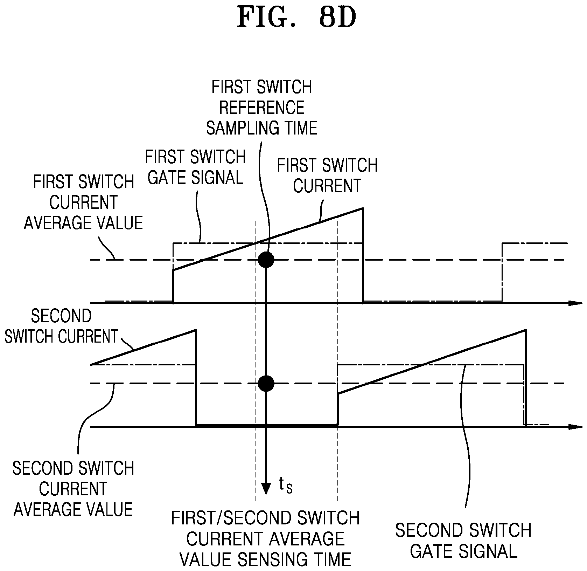

Referring to FIG. 8D, a current $i_1$ flowing through the first switch 33_1 sensed by the CT3 38_1 and a current $i_2$ flowing through the second switch 33_2 sensed by the CT4 38_2 may both be filtered by the low pass filter. The currents $i_1$ and $i_2$ filtered by the low pass filter may have an average value at any point in the switching cycle regardless of the switching period of each switch. Thus, the microcomputer of the power control device may simultaneously sample the average values of the currents $i_1$ and $i_2$ even when sampling is performed once in any period regardless of the switching period of the switch. The currents $i_1$ and $i_2$ filtered by the low pass filter may not have completely the same value in the switching cycle but may have at least substantially the same value within a minimum error range, and such an error may be negligible in comparing the two currents in performing balancing control.

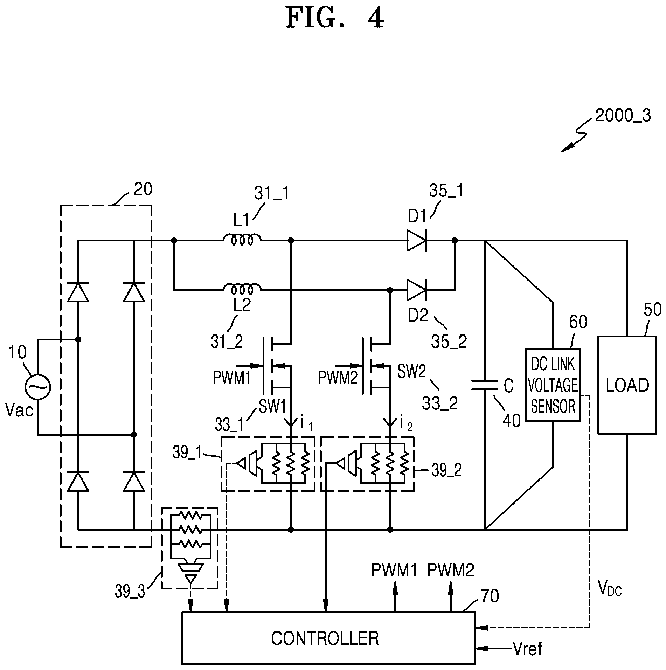

FIG. 4 is a circuit diagram illustrating an interleaved boost PFC power control device 2000_3 according to an embodiment of the present disclosure.

The interleaved boost PFC power control device 2000_3 of FIG. 4 may be different from the interleaved boost PFC power control device 2000_2 of FIG. 3A in that the current sensor includes shunt resistors instead of a current transformer (CT). Referring to FIG. 4, a current $i_1$ conducted through the first switch 33_1 may be sensed by a first shunt resistor 39_1 that is a current sensor, a current $i_2$ conducted through the second switch 33_2 is sensed by a second shunt resistor 39_2 that is a current sensor, and a current $i_{PFC}$ flowing through the rectifier 20 may also be sensed by a third shunt resistor 39_3.

Unlike the interleaved boost PFC power control device 2000_1 of FIG. 2, the interleaved boost PFC power control device 2000_3 of FIG. 4 may have an advantage in that a current conducted through the switch (33_1, 33_2) for PFC control may be detected not in front of the switch (33_1 and 33_2) or the inductor (31_1 and 31_2) but in back of the switch (33_1 and 33_2) to prevent the potential of the current sensor (39_1, 39_2) from becoming a floating potential. Also, when the current is sensed by the shunt resistor, a sensing circuit may be simply configured without a separate insulation circuit.

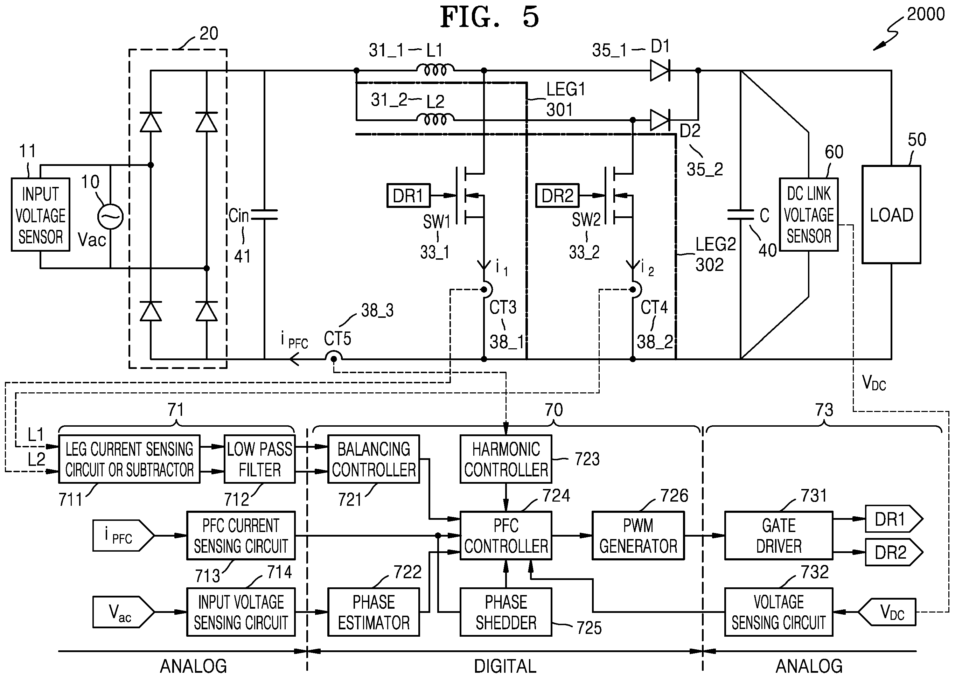

FIG. 5 is a circuit diagram of a power control device and a detailed block diagram of a controller according to an embodiment of the present disclosure.

Referring to FIG. 5, an entire control configuration may be divided into three units, that is, a first analog unit 71, a controller 70, and a second analog unit 73. The controller 70 may be a unit that performs digital control.

The first analog unit 71 and the second analog unit 73 may include an analog circuit. The controller 70 may be a block that may be performed by control by the microcomputer (or processor).

The first analog unit 71 may include a leg current sensing circuit (or subtractor) 711, a low pass filter 712, a PFC current sensing circuit 713, and an input voltage sensing circuit 714.

The leg current sensing circuit (or subtractor) 711 may be a circuit that senses a current flowing through a first leg 301 and a second leg 302 where switches 33_1 and 33_2 are respectively located. The leg current sensing circuit (or subtractor) 711 may sense a current in back of each switch (33_1 and 33_2). The leg current sensing circuit (or subtractor) 711 may include a CT (current transformer or current transducer) or a shunt resistor; however, the present disclosure is not limited thereto and any unit capable of sensing and detecting a current may be included in the leg current sensing circuit (or subtractor) 711. Currents $i_1$ and $i_2$ sensed by the leg current sensing circuit (or subtractor) 711 may be filtered through the low pass filter 712. In this case, the cutoff frequency of the low pass filter 712 may be set to 1/10 times or less of the switching frequency of each switch (33_1 and 33_2).

The PFC current sensing circuit 713 may be a circuit that senses a current $i_{PFC}$ flowing through a power control device 2000. The PFC current sensing circuit 713 may include a CT (current transformer or current transducer) or a shunt resistor; however, the present disclosure is not limited thereto and any unit capable of sensing and detecting a current may be included in the PFC current sensing circuit 713.

The input voltage sensing circuit 714 may be a circuit that senses an input voltage of an input power supply 10 of the power control device. The input voltage sensing circuit 714 may be a circuit including an input voltage sensor 11. Through the sensed input voltage, harmonic control and power factor correction may be performed by considering the phase difference from an input current.

The controller 70 may be a unit where digital control is performed by the microcomputer (or processor). The controller 70 may include a balancing controller 721, a phase estimator 722, a harmonic controller 723, a PFC controller 724, a phase shedder 725, and a PWM generator 726.

The balancing controller 721 may perform current balancing control based on the current value flowing through each switch obtained by sampling once during the entire switching cycle when the current flowing through the first switch 33_1 and the second switch 33_2 passes through the low pass filter 712.

The phase estimator 722 may estimate the phase of the input voltage of the system so that the phases of the input voltage and the phase of the current $i_{PFC}$ of the system may be as uniform as possible during power factor correction.

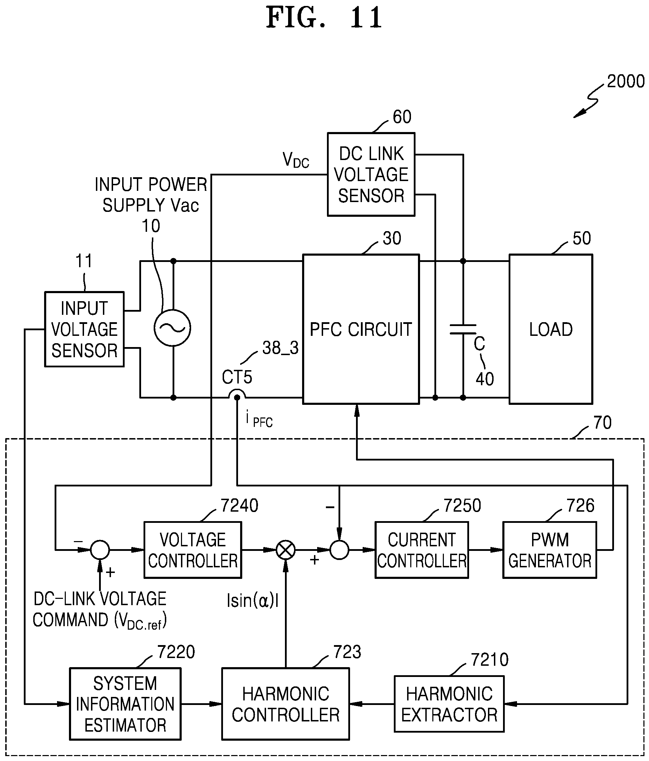

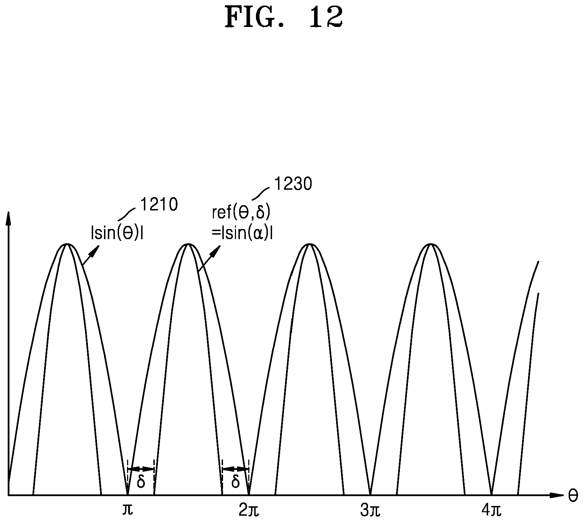

The harmonic controller 723 may perform control to reduce the input current harmonic of the system. A detailed embodiment of the harmonic control will be described with reference to FIGS. 11 and 12.

The PFC controller 724 may perform power factor correction based on the estimation of the phase difference between the input voltage and current of the system according to the phase estimator 722 and the current $i_{PFC}$. The power factor will be improved as the phase difference between the input voltage and current of the system is reduced. The PFC controller 724 may also perform power factor correction based on the current command according to the harmonic control by the harmonic controller 723.

The phase shedder 725 may suitably perform control such that two legs may be used in a balanced manner in order to prevent an increase in stress of one leg due to unbalanced use of the first leg 301 and the second leg 302 to which the first switch 33_1 and the second switch 33_2 belong. For example, in a low-load operation where only one leg is used, the phase shedder 725 may prevent the operation from being biased to one leg by randomly or sequentially selecting a leg such that each leg may be used in a balanced manner.

The PWM generator 726 may generate switching waveforms PWM1 and PWM2 to be applied to the respective switches 33_1 and 33_2 based on the voltage command finally determined by the PFC controller 724. A gate driver 731 driving the switches 33_1 and 33_2 may be driven by the switching waveforms PWM1 and PWM2.

The second analog unit 73 may include a gate driver 731 and a DC link voltage sensing circuit 732. The gate driver 731 may output an on/off signal to the gates of the first switch 33_1 and the second switch 33_2 based on the PWM switching signals PWM1 and PWM2 generated by the PWM generator 726. The DC link voltage sensing circuit 732 may sense a voltage across the DC link capacitor 40 and may be a circuit that replaces or includes the DC link voltage sensor 60.

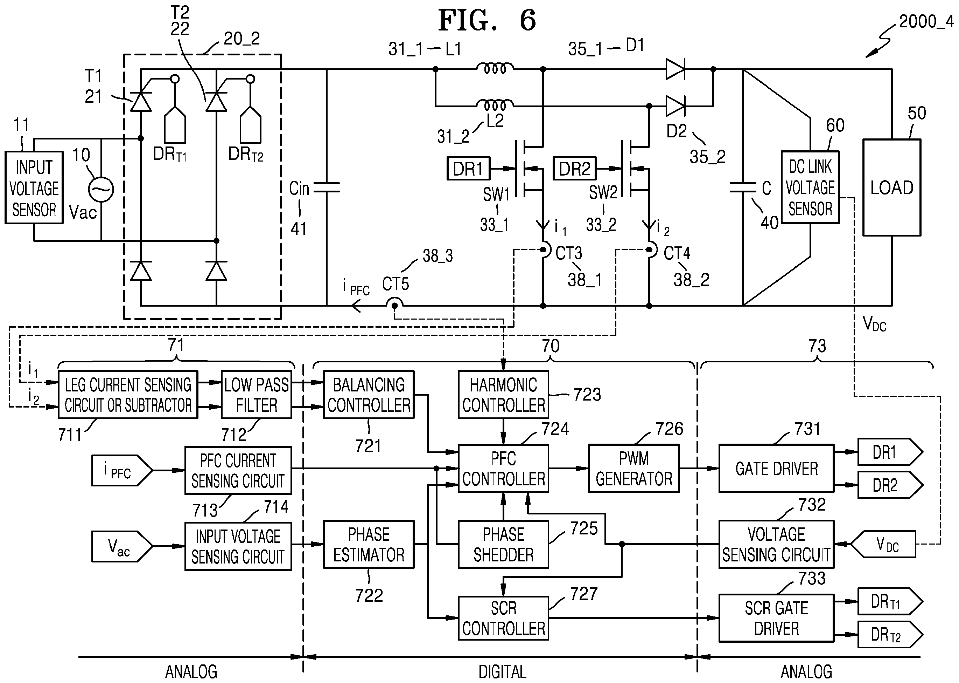

FIG. 6 is a circuit diagram of a power control device and a detailed block diagram of a controller according to an embodiment of the present disclosure.

A power control device 2000_4 of FIG. 6 may be substantially similar to the controller 70 and the circuit diagram of the power control device 2000 of FIG. 5 but may include at least one thyristor (silicon controlled rectifier (SCR)) (T1 and T2) 21 and 22 instead of a diode for each leg of a rectifier 20_2 such that the charge speed in the DC link capacitor 40 may be controlled. Thus, an SCR controller 727 may control the thyristors (T1 and T2) 21 and 22 of the rectifier 20_2 to control the charge speed in the DC link capacitor 40.

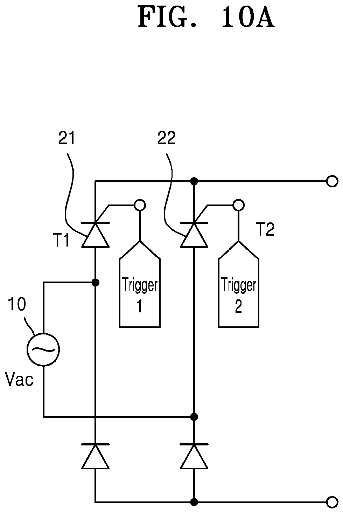

The thyristor control will be described in more detail with reference to FIGS. 10A to 10D.

FIG. 10A is a circuit diagram of a rectifier using an SCR according to an embodiment of the present disclosure.

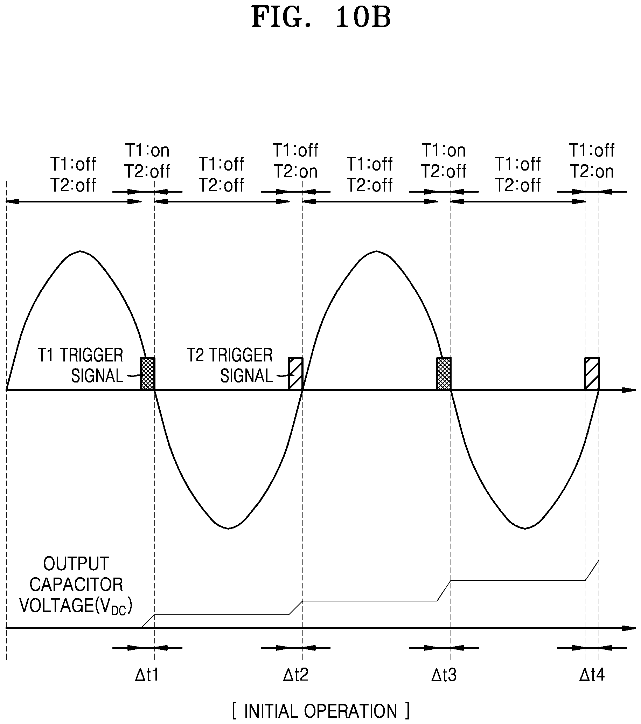

Referring to FIG. 10A, it may be seen that at least one thyristor (T1 and T2) 21 and 22 are provided for each leg of the rectifier. When a trigger signal is input to the T1 21 and the T2 22, the input power supply 10 may start to be rectified and the rectified input power supply 10 may be charged into the DC link capacitor 40. The principle of the input power supply 10 being gradually charged into the DC link capacitor 40 will be described in more detail with reference to FIGS. 10B to 10D.

FIGS. 10B to 10D are waveform diagrams illustrating a charge operation in a rectifier using an SCR according to an embodiment of the present disclosure.

FIG. 10B is a waveform diagram illustrating an initial charge operation in a rectifier using an SCR according to an embodiment of the present disclosure.

Referring to FIG. 10B, an initial operation of the rectifier for initial charging of the DC link capacitor 40 may be performed.

Referring to FIG. 10A, when the T1 21 is turned on immediately before the falling zero crossing of the input power supply 10, the input power supply 10 may be rectified for a period $\Delta t1$ and the DC link voltage $V_{DC}$ may start to increase gradually as illustrated in FIG. 10B. Even during the next half cycle of the input power supply 10, the T2 22 may be turned on only near the rising zero crossing and thus the input power supply 10 may be rectified only for a period $\Delta t2$ and the DC link voltage $V_{DC}$ may increase gradually in proportion to the voltage rectified for the period $\Delta t2$.

Next, in the half cycle of input power supply 10, the input power supply 10 may be rectified for a period $\Delta t3$ by advancing the turn-on time of the T1 21 such that the input power supply 10 is rectified for a period slightly longer than the preceding period $\Delta t1$. Here, $\Delta t3 > \Delta t1$. Likewise, in the next half cycle of input power supply 10, the input power supply 10 may be rectified for a period $\Delta t4$ by advancing the turn-on time of the T2 22 such that the input power supply 10 is rectified for a period slightly longer than the preceding period $\Delta t2$. Here, $\Delta t4 > \Delta t2$.

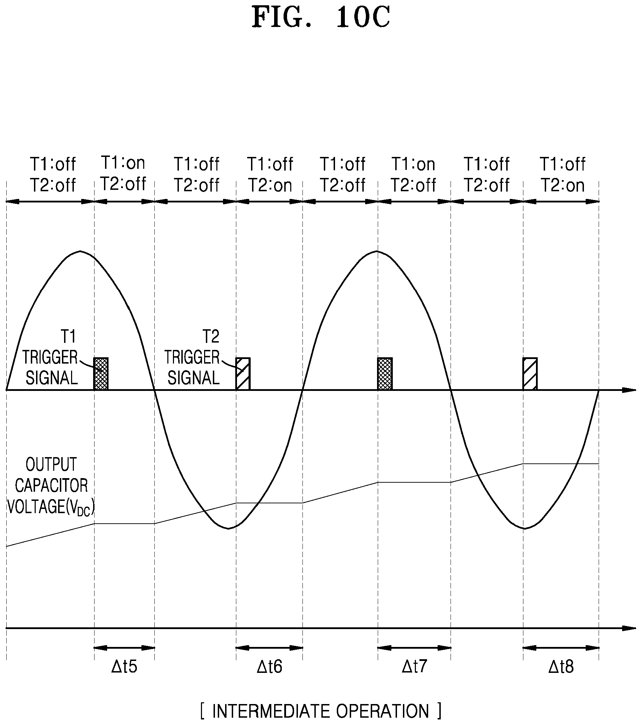

FIG. 10C may be considered as an intermediate operation of the rectifier following the initial operation of FIG. 10B in terms of time.

Referring to FIG. 10C, compared to FIG. 10A, the T1 (21) trigger signal may be further advanced in the half cycle of the input power supply 10 such that the input power supply 10 is rectified for a period $\Delta t5$. Here, $\Delta t4 > \Delta t3$. Likewise, compared to FIG. 10A, the turn-on time of the T2 (22) may also be further advanced by the T2 (22) trigger signal in the half cycle of the input power supply 10 such that the value of the DC link capacitor voltage $V_{DC}$ may increase gradually. Here, $\Delta t6 > \Delta t4$.

The T1 (21) trigger signal may now be triggered at a time of $\pi/2$ (90 degrees) in the half cycle of the input power supply 10 such that the input power supply 10 is rectified for a period $\Delta t7$ ($\Delta t7 > \Delta t5$) and $\Delta t8$ ($\Delta t8 > \Delta t6$). The rectified voltage may be charged into the DC link capacitor 40 and the value of the DC link capacitor voltage $V_{DC}$ may further increase.

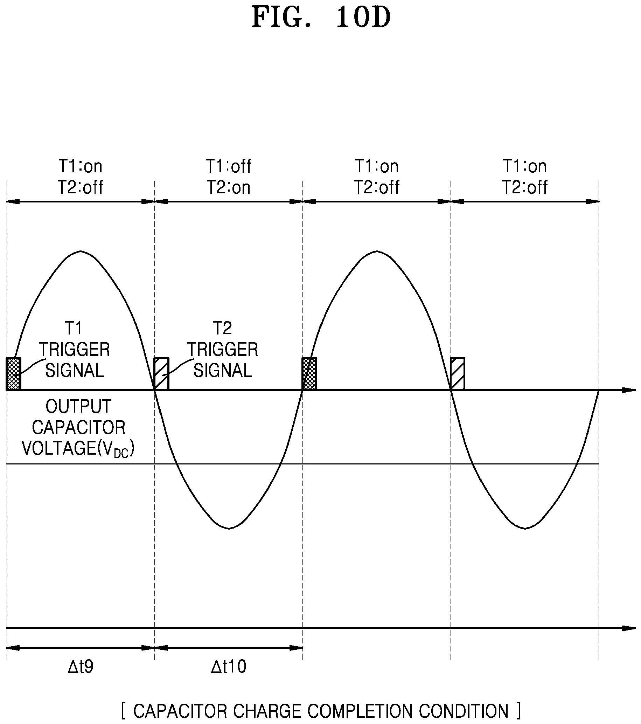

Referring to FIG. 10D, the charging of the DC link capacitor 40 may be completed such that the DC link capacitor voltage $V_{DC}$ maintains the maximum value. Because the thyristors (T1 and T2) 21 and 22 are turned on at the same point as the zero crossing point, the thyristors (T1 and T2) 21 and 22 may perform substantially the same rectification as a diode. When the charging of the DC link capacitor 40 is completed, $\Delta t9 + \Delta t10 = 2\pi$ (360 degrees).

In this way, instead of being abruptly increased, the voltage $V_{DC}$ across the DC link capacitor 40 may be gradually increased to ensure the stability of the system.

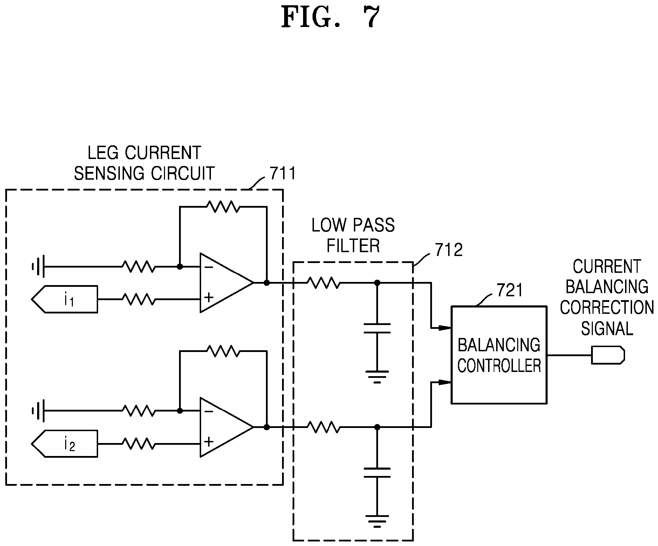

FIG. 7 is a circuit diagram for balancing control according to an embodiment of the present disclosure.

Each of currents $i_1$ and $i_2$ flowing through the first leg 301 and the second leg 302 of the power control device may be scaled through the sensing circuit. The currents $i_1$ and $i_2$ scaled through the leg current sensing circuit 711 may be filtered through the low pass filter 712. The filtered current may be filtered once by the microcomputer (or processor) during the switching cycle. The balancing controller 721 may perform balancing control by comparing the DC values (or average values) of the currents $i_1$ and $i_2$ flowing through the first leg 301 and the second leg 302 to further increase the turn-on duty of the first switch 33_1 when the DC value (or average value) of the current $i_1$ is lower than the DC value (or average value) of the current $i_2$ or to further increase the turn-on duty of the second switch 33_2 when the DC value (or average value) of the current $i_2$ is lower than the DC value (or average value) of the current $i_1$.

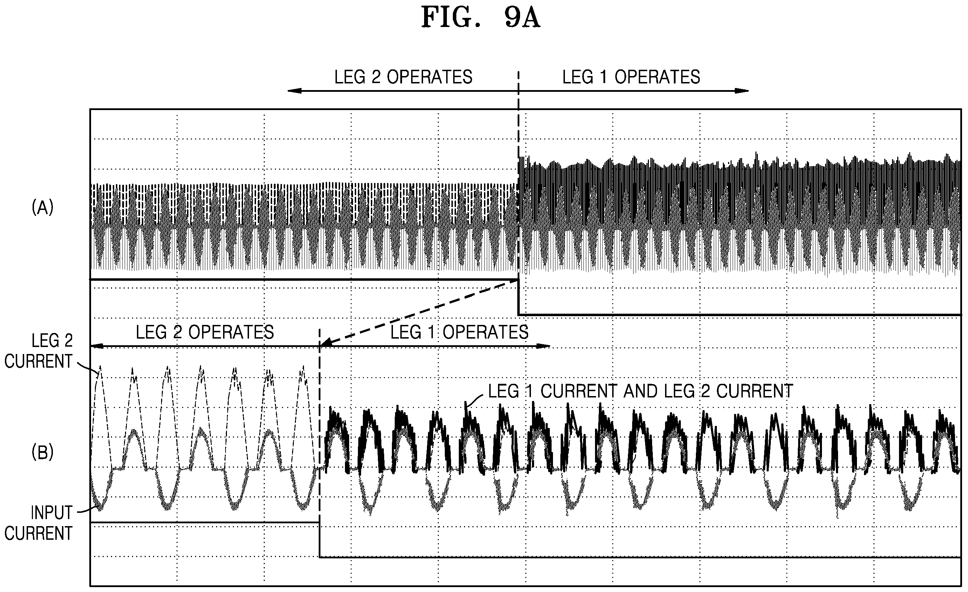

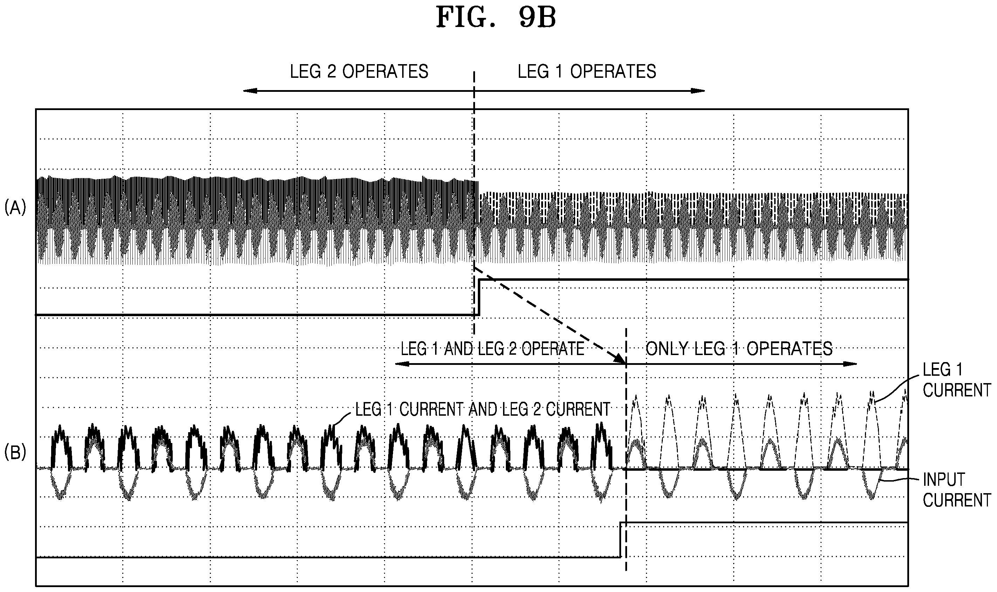

FIGS. 9A and 9B are current waveform diagrams during phase shedding control according to an embodiment of the present disclosure.

Referring to FIGS. 9A the upper graph (A) illustrates the input current of the power control device and the current flowing through the first leg 301 and the second leg 302. The lower graph (B) of FIG. 9A illustrates the upper graph (A) with the expanded time. When only the second leg 302 of the power control device is operated, there may be no current flowing through the first leg 301. In general, only the second leg 302 may be operated when there is a low load or when the first leg 301 fails. When the first leg 301 is operated while the second leg 302 is operating, a current $i_1$ flowing through the first leg 301 and a current $i_2$ flowing through the second leg 302 may occur together.

On the contrary, FIG. 9B illustrates a waveform in which the second leg 302 stops operating and only the first leg 301 operates while the first leg 301 and the second leg 302 operate together.

FIG. 11 illustrates a power control device including a harmonic controller according to an embodiment of the present disclosure.

Referring to FIG. 11, a power control device 2000 including a harmonic controller may be a home appliance; however, the present disclosure is not limited thereto. According to an embodiment of the present disclosure, the power control device 2000 of FIG. 11 may be applied not only to an air conditioner and/or an air conditioner outdoor unit but also to a server power supply and an electric vehicle slow charger. Also, the power control device 2000 of FIG. 11 may include, but is not limited to, an air conditioner, a washing machine, a dryer, a light control device, a TV, a heating device, and a styler. The heating device may include, but is not limited to, a smart kettle, a teapot, a coffee pot, an induction device, a toaster, an air fryer, a highlighter, and a rice cooker.

Not all of the components illustrated in the power control device 2000 of FIG. 11 are essential components. The power control device 2000 may include more or fewer components than the illustrated components. According to an embodiment of the present disclosure, the power control device 2000 may be a household appliance, a home appliance, an electric appliance, or a cooking appliance. Also, according to an embodiment of the present disclosure, the power control device 2000 may be a home appliance independently sold or may be a device constituting some product of a home appliance.

Hereinafter, each component of the power control device 2000 will be described.

According to an embodiment, the input power supply (Vac) 10 may be an AC power supply through a power supply line connected to a power outlet. According to an embodiment, the input power supply 10 may be a receiving device that wirelessly receives AC power from a wireless station (not illustrated) according to wireless power transmission.

The input voltage sensor 11 may sense the voltage of the input power supply 10 and transmit the sensed voltage information to the input of the controller 70. The current sensor (CT5) 38_3 may sense the current of the input power supply and transmit the sensed current information to the input of the controller 70.

According to an embodiment, the PFC circuit 30 of FIG. 11 may include a rectifier circuit. A detailed circuit of the PFC circuit 30 may be the PFC circuit of FIGS. 1 to 3. The voltage harmonic-controlled through the PFC circuit 30 may be smoothed by the DC link capacitor 40 and supplied to the load 50. The voltage sensed by the input voltage sensor 61, the DC link voltage $V_{DC}$ sensed by the DC link voltage sensor 60, and the current of the input power supply sensed by the current sensor (CT5) 38_3 may all used as an input of the controller 70.

In an embodiment, the controller 70 may be a place where control processing is performed by a processor or microcomputer (not illustrated) included in the power control device 2000. A block diagram of a control device including a processor or microcomputer will described below in detail with reference to FIG. 13.

Hereinafter, the operation of the controller 70 will be described in detail.

A harmonic extractor 7210 may extract harmonic components from the current ($i_{PFC}$) information of the system sensed by the current sensor 38_3. The extraction of the harmonic components may be managed by the processor or microcomputer, and the harmonic components may be extracted by using fast Fourier transform (FFT) or a band pass filter. The type of the extracted harmonic components may vary depending on the performance and memory capacity of the processor or microcomputer included in the power control device 2000. In an embodiment, when the performance and memory capacity of the processor or microcomputer are supported, the processor or microcomputer may extract not only a third harmonic component but also high-frequency harmonic components (e.g., fifth, seventh, and ninth harmonic components) from the system current. When the processor or microcomputer extracts high-frequency harmonic components to perform harmonic control, the power factor of the entire system including the power control device 2000 may be more precisely improved. However, when the performance and memory capacity of the processor or microcomputer are restricted, the processor or microcomputer may extract only the third harmonic component having the greatest influence on a total harmonic distortion (THD) or the third harmonic component and the fifth harmonic component. Even when the processor or microcomputer controls only the size of the third harmonic component or the size of the third harmonic component and the fifth harmonic component, the harmonic control and/or power factor improvement effect according to the present disclosure may be achieved.

A system information estimator 7220 may receive the voltage information of the sensed voltage of the input power supply 10 from the input voltage sensor 11. Basically, the harmonic controller 723 may receive the current information of the input power supply 10 sensed by the current sensor 38_3, the harmonic components extracted by the harmonic extractor 7210, and the voltage information of the input power supply 10 from the system information estimator 7220 to determine the phase difference between the input voltage and the input current and determine the size of the harmonic components.

When determining that the size of the harmonic components is larger than a certain standard value and thus does not satisfy the standard, the harmonic controller 723 may output a control value to reduce a non-conducting period size $\delta$ (non-switching period size) of the switch included in the PFC circuit 30.

On the other hand, when the size of the harmonic components satisfies the standard, the harmonic controller 723 may output a control value to increase a non-conducting period size $\delta$ (non-conducting period value or non-switching period size) of the switch included in the PFC circuit 30. For reference, throughout the present disclosure, a certain standard value may be used interchangeably with the same meaning as a certain reference value, and a certain harmonic standard value may be used interchangeably with the same meaning as a certain harmonic reference value. Also, throughout the present disclosure, a non-conducting period of the switch may be used interchangeably with the same meaning as a non-switching period.

The standard of harmonic components may differ by country and by power level. Thus, depending on the country and power level, the harmonic controller 723 may predetermine the size of the harmonic standard to be compared with the input harmonic component and store the same in an internal memory. For example, the IEEE standard 519 (2014) may set the following THD limits.

[Table 1]

| Bus voltage V at PCC* | Individual Harmonics (%) | Total harmonic distortion THD (%) |
|---|---|---|
| V ≤ 1.0 kV | 5.0 | 8.0 |
| 1.0 kV < V ≤ 69kV | 3.0 | 5.0 |
| 69kV < V ≤ 161kV | 1.5 | 2.5 |
| 161kV < V | 1.0 | 1.5** |
| * PCC: Point of common coupling<br>** High-voltage system allows up to 2.0 % THD | | |

In an embodiment, the harmonic controller 723 may output a current shape command ref($\theta$, $\delta$) = |sin$\alpha$| based on phase information $\theta$ of the voltage determined through the non-conducting period size $\delta$ of the switch and the voltage information of the input power supply 10. The current shape command ref($\theta$, $\delta$) = |sin$\alpha$| may be referred to as a phase command reflecting the non-conducting period size. The DC link voltage sensor 60 may sense a voltage across the DC link capacitor 40, and the sensed DC link voltage value $V_{DC}$ may be operated with the DC link voltage command (calculation of the difference between the DC link voltage command and the DC link across-voltage value) and the result thereof may be input to a voltage controller 7240. The output of the voltage controller 7240 may be referred to as a current size command. The output current size command may be input to a current controller 7250 together with the output |sin$\alpha$| of the harmonic controller 723 and the current information sensed by the current sensor 38_3. The current controller 7250 may calculate a final current command value by multiplying the current size command by the current phase and current shape command |sin$\alpha$|, and the PWM generator 726 may output a gate signal for switch control of the PFC circuit 30. In an embodiment, according to the operation of the controller 70, the PFC circuit 30 may output a current waveform based on the current shape command |sin$\alpha$| according to Equation 1 below.

[Equation 1]

$$ref(\theta,\delta) = \sin(\alpha) = \sin(\frac{\pi\theta}{\pi-2\delta} - \frac{\pi}{2}(\frac{\pi}{\pi-2\delta} - 1))...\theta > \delta \text{ or } \theta < \pi-\delta$$

$$ref(\theta,\delta) = \sin(\alpha) = \sin(\frac{\pi(0-\pi)}{\pi-2\delta} - \frac{\pi}{2}(\frac{\pi}{\pi-2\delta} - 1))...\theta > \pi+\delta \text{ or } \theta < 2\pi-\delta$$

$$ref(\theta,\delta) - \sin(\alpha) = 0, \text{ } elsewise$$

The generation of the current shape command according to Equation 1 is merely an example, and the current command may be generated by other methods.

In FIG. 11, the harmonic controller 723, the voltage controller 7240, and the current controller 7250 may generally use a PI controller (proportional integral controller); however, the present disclosure is not limited thereto.

In an embodiment, due to the boost operation of the power control device 2000 by the PFC circuit 30 of FIG. 11, the size of the DC voltage across the DC link capacitor 40 may be greater than the size of the input voltage of the system.

FIG. 12 illustrates a waveform of a current shape command output reflecting a non-conducting period according to an embodiment of the present disclosure.

Referring to FIG. 12, when a non-conducting period size $\delta$ is determined, a current waveform |sin$\theta$| (1210) of a continuous sine waveform may have a current waveform according to a current shape command of the shape of |sin$\alpha$| (1230) as illustrated in FIG. 12. Considering the current waveform, |sin$\alpha$| (1230) may have an increased harmonic component than |sin$\theta$| (1210). When the harmonic component of |sin$\alpha$| (1230) becomes greater than a certain harmonic standard value, the non-conducting period size $\delta$ may decrease according to the control by the power control device 2000 and |sin$\alpha$| (1230) waveform may become closer to |sin$\theta$| (1210) waveform. On the other hand, when the harmonic component of |sin$\alpha$| (1230) becomes less than a certain harmonic standard value, the current waveform of |sin$\alpha$| (1230) may be determined such that the non-conducting period size $\delta$ of the switch further increases.

FIG. 13 is a block diagram of a power control device according to an embodiment of the present disclosure.

The block diagram of the power control device may correspond and apply to all of the power control devices of FIGS. 1 to 7 and FIG. 11 as well as to the power control device 2000. The block diagram of the power control device of FIG. 13 may include a microcomputer or a processor 2200 that performs gate control of the PFC circuit 30 and overall control of the controller 70 together with a circuit diagram according to the system.

As illustrated in FIG. 13, the power control device 2000 according to an embodiment of the present disclosure may include a driver 2100, a processor 2200, a communication interface 2300, a sensor unit 2400, an output interface 2500, a user input interface 2600, and a memory 2700. Not all of the components of the power control device 2000 are essential, and each of the components may be added or subtracted depending on the design concept of the manufacturer.

Hereinafter, the above components will be described in sequence.

The driver 2100 may receive power from an external power supply and supply a current to the load according to a driving control signal of the processor 2200. The driver 2100 may include an electromagnetic interference (EMI) filter 2111, a rectifier circuit 2112, an inverter circuit 2113, a PFC circuit 30, and a low pass filter 712; however, the present disclosure is not limited thereto.

The EMI filter 2111 may block a high-frequency noise included in alternating current (AC) power supplied from an external power supply (external source (ES)) and pass an AC voltage and an AC current of a predetermined frequency (e.g., 50 Hz or 60 Hz). A fuse and a relay for blocking an overcurrent may be arranged between the EMI filter 2111 and the external power supply (ES). The AC power obtained when the high-frequency noise is blocked by the EMI filter 2111 may be supplied to the rectifier circuit 2112.

The rectifier circuit 2112 may be a circuit included in the rectifier 20. The rectifier circuit 2112 may convert AC power into DC power. For example, the rectifier circuit 2112 may convert an AC voltage (positive voltage or negative voltage) whose magnitude and polarity change with time into a DC voltage whose magnitude and polarity are constant and may convert an AC current (positive current or negative current) whose magnitude and direction change with time into a DC current whose magnitude is constant. The rectifier circuit 2112 may include a bridge diode. For example, the rectifier circuit 2112 may include four diodes. The bridge diode may convert an AC voltage whose polarity changes with time into a positive voltage whose polarity is constant and may convert an AC current whose direction changes with time into a positive current whose direction is constant. In an embodiment, the rectifier circuit 2112 may include two diodes and two thyristers. A thyristor and a diode may constitute a rectifier leg, and another thyristor and another diode may constitute another rectifier leg. However, this corresponds to the case where the input power is single-phase, and when the input power is three-phase, the rectifier circuit 2112 may include three legs including three thyristors and three diodes. The processor 2200 may control the thyristors such that the voltage charged into the DC link capacitor 40 does not increase abruptly but increases gradually.

The inverter circuit 2113 may include a switching circuit that supplies or blocks a current to a load (not illustrated). The switching circuit may include a first switch and a second switch. The first switch and the second switch may be connected in series between a plus line and a minus line output from the rectifier circuit 2112. The first switch and the second switch may be turned on or off according to a driving control signal of the processor 2200.

The inverter circuit 2113 may control a current supplied to the load. For example, the magnitude and direction of a current flowing through the load may change according to the turn-on/off of the first switch and the second switch included in the inverter circuit 2113. In this case, an AC current may be supplied to the load. An AC current in the form of a sine wave may be supplied to the load according to the switching operation of the first switch and the second switch. Also, as the switching cycle of the first switch and the second switch increases (e.g., as the switching frequency of the first switch and the second switch decreases), the current supplied to the load may increase and the strength of the magnetic field output to the load (the output of a heating device when the power control device 2000 is the heating device) may increase. In FIG. 13, because the inverter circuit 2113 may be required to supply an alternating current to the load, the inverter circuit 2113 may not be required in the power control device 2000 that supplies a direct current to the load. Also, when the power control device 2000 is an interleaved boost power device according to an embodiment of the present disclosure, because switch control may be required through the switches 33_1 and 33_2 of the legs 301 and 302, a separate inverter circuit may not be required. In other words, according to an embodiment, the inverter circuit 2113 of the power control device 2000 may be used as a replacement for the PFC circuit 30.

The driver 2100 of the power control device 2000 may include a low pass filter 712. The low pass filter 712 may be configured as an analog circuit or may also be implemented as a digital program. The DC value or average value of the current may be easily obtained by sampling the currents $i_1$ and $i_2$ respectively detected in the legs 301 and 302 through the low pass filter 712, once at any time during the switching cycle.

The processor 2200 may control an overall operation of the power control device 2000. By executing the programs stored in the memory 2700, the processor 2200 may control the driver 2100, the communication interface 2300, the sensor unit 2400, the output interface 2500, the user input interface 2600, and the memory 2700.

According to an embodiment of the present disclosure, the processor 2200 may be mounted with an artificial intelligence (AI) processor. The AI processor may be manufactured in the form of a dedicated hardware chip for AI and may be manufactured as a portion of a general-purpose processor (e.g., CPU or application processor) or a dedicated graphics processor (e.g., GPU) and then mounted on the heating device 2000.

According to an embodiment of the present disclosure, the processor 2200 may perform the controller operation of a harmonic extractor, a harmonic controller, a current controller, and a voltage controller included in the controller 70 of the power control device 2000. Here, the controller of the harmonic controller, the current controller, and the voltage controller may be a PI controller; however, the present disclosure is not limited thereto. Information about the harmonic component standard value of the power control device 2000 may be stored in the memory 2700.

The processor 2200 may include a communication interface 2300 to operate on an Internet of Things (IoT) network or a home network as necessary.

The communication interface 2300 may include a short-range wireless communication interface 2310 and a long-range communication interface 2320. The short-range wireless communication interface 2310 may include, but is not limited to, a Bluetooth communication interface, a Bluetooth Low Energy (BLE) communication interface, a Near Field Communication interface, a WLAN (WiFi) communication interface, a ZigBee communication interface, an Infrared Data Association (IrDA) communication interface, a WiFi Direct (WFD) communication interface, an Ultra-Wideband (UWB) communication interface, and/or an Ant+ communication interface. The long-range communication interface 2320 may transmit/receive wireless signals to/from at least one of a base station, an external terminal, or a server on a mobile communication network. Here, the wireless signals may include voice call signals, video call signals, or various types of data according to transmission/reception of text/multimedia messages. The long-range communication interface 2320 may include a 3G module, a 4G module, a 5G module, an LTE module, an NB-IoT module, and/or an LTE-M module but is not limited thereto.

According to an embodiment of the present disclosure, through the communication interface 2300, communication may be performed with and data may be transmitted/received to/from a server or other electric appliances outside the power control device 2000.

The sensor unit 2400 may include a current sensor 1600, an input voltage sensor 11, and a DC link voltage sensor 60. The current sensor 1600 may be arranged at various positions in the circuit of the power control device 2000 to obtain current (mainly AC current) information. For example, the current sensor 1600 may include a sensor 37_1, 38_1, or 39_1 for sensing a current flowing through the first leg 301, a sensor 37_2, 38_2, or 39_2 for sensing a current flowing through the second leg 302, and a sensor 38_3 for sensing a current $i_{PFC}$ of the system. The input voltage sensor 11 may be used to sense voltage information of the input power supply 10 of the power control device 2000. A DC link voltage sensor 1800 may sense a DC link voltage to be used as an input of the voltage controller 7240.

The output interface 2500 may be for outputting an audio signal or a video signal and may include a display unit 2510 and an audio output unit 2520.

Moreover, according to an embodiment of the present disclosure, the power control device 2000 may display information related to the power control device 2000 through the display unit 2510. For example, the power control device 2000 may display power factor information of the power control device 2000 or each harmonic component value (e.g., % or A (ampere) of each harmonic component versus the input current) on the display unit 2510.

When the display unit 2510 and a touch pad are configured as a touch screen by forming a layer structure, the display unit 2510 may also be used as an input device in addition to an output device. The display unit 2510 may include at least one of a liquid crystal display, a thin film transistor-liquid crystal display, a light emitting diode (LED), an organic light emitting diode, a flexible display, a three-dimensional (3D) display, or an electrophoretic display. Also, depending on the type of the power control device 2000, the power control device 2000 may include two or more display units 2510.

The audio output unit 2520 may output audio data received from the communication interface 2300 or stored in the memory 2700. Also, the audio output unit 2520 may output an audio signal related to a function performed by the power control device 2000. The audio output unit 2520 may include a speaker and/or a buzzer.

According to an embodiment of the present disclosure, the output interface 2500 may output at least one of the power factor information and the harmonic component information through the display unit 2510. According to an embodiment of the present disclosure, the output interface 2500 may display a current power level, an operation mode (e.g., a low-noise mode, a normal mode, or a high-power mode), a power factor control state, a current power factor, and/or the like.

The user input interface 2600 may be for receiving an input from the user. The user input interface 2600 may include, but is not limited to, at least one of a keypad, a dome switch, a touch pad (e.g., a capacitive overlay type, a resistive overlay type, an infrared beam type, a surface acoustic wave type, an integral strain gauge type, or a piezoelectric type), a jog wheel, or a jog switch.

The user input interface 2600 may include a speech recognition module. For example, the power control device 2000 may receive a voice signal, which is an analog signal, through a microphone and convert a voice portion into computer-readable text by using an automatic speech recognition (ASR) model. By using a natural language understanding (NLU) model, the power control device 2000 may interpret the resulting text to obtain the intention of the user's utterance. Here, the ASR model or the NLU model may be an AI model. The AI model may be processed by a dedicated AI processor designed in a hardware structure specialized for processing the AI model. The AI model may be generated through training. Here, being generated through training may mean that a basic AI model is trained by a learning algorithm by using a plurality of pieces of training data and accordingly a predefined operation rule or AI model set to perform a desired feature (or purpose) is generated. The AI model may include a plurality of neural network layers. Each of the plurality of neural network layers may have a plurality of weights (weight values) and may perform a neural network operation through an operation between the plurality of weights and the operation result of a previous layer.

Linguistic understanding may be a technology for recognizing and applying/processing human languages/characters and may include natural language processing, machine translation, dialog system, question answering, speech recognition/synthesis, and the like.

The memory 2700 may store a program for processing and controlling by the processor 2200 and may store input/output data (e.g., power factor information of the power control device 2000 or information about the harmonic component). The memory 2700 may store an AI model.

The memory 2700 may include at least one type of storage medium from among flash memory type, hard disk type, multimedia card micro type, card type memory (e.g., SD or XD memory), random access memory (RAM), static random access memory (SRAM), read only memory (ROM), electronically erasable programmable read only memory (EEPROM), programmable read only memory (PROM), magnetic memory, magnetic disk, and optical disk. Also, the power control device 2000 may operate a cloud server or a web storage for performing a storage function on the Internet.

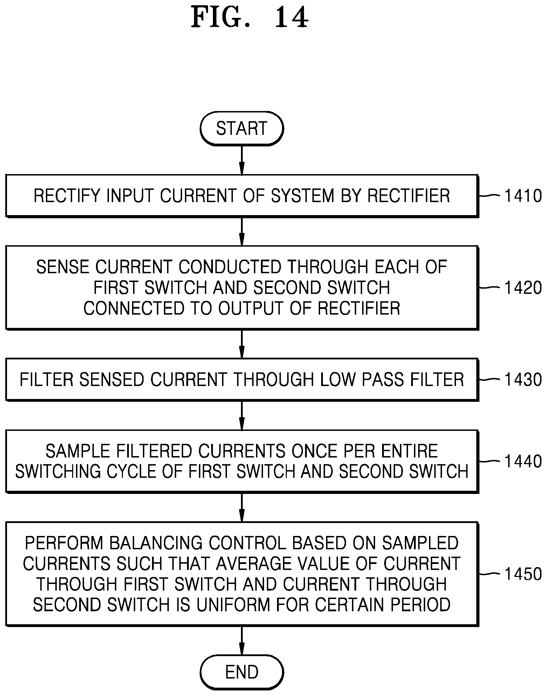

FIG. 14 is a flowchart of a method of performing balancing control in a power control device according to an embodiment of the present disclosure.

In operation 1410, the input current of the system may be rectified by the rectifier 20. The rectifier 20 may generally use a diode but may include an active element capable of switching, such as a thyristor, as described above with reference to FIG. 6. The controller 70 may reduce the stress on the DC link capacitor by allowing the initial DC link charging to be gradually performed by the thyristor (SCR).

In operation 1420, the current sensor may sense the current conducted through each of the first switch 33_1 and the second switch 33_2 connected to the output of the rectifier 20. In this case, when the first switch 33_1 and the second switch 33_2 are driven in an interleaved manner, the current may be sensed in front of the inductor arranged in front of each switch or may be sensed in back of each switch to form a common ground.

In operation 1430, the current sensed in each of the legs 301 and 302 may be filtered by a low pass filter circuit or digital low pass filtering.

In operation 1440, because the low-pass-filtered current has a substantially uniform value, that is, a value within a certain error value, in the switching cycle, the processor 2200 may sample all the currents respectively sensed in the legs 301 and 302 only once. That is, the current flowing through the first switch 33_1 and the current flowing through the second switch 33_2 may be precisely sampled by just one sampling in a cycle that is equal to the sum of the cycle of the first switch 33_1 and the cycle of the second switch 33_2.

In operation 1450, the processor 2200 of the power control device may perform balancing control based on the sampled current such that an average value of the current conducted through the first switch 33_1 and the current conducted through the second switch 33_2 is uniform for a certain (predetermined) period. The processor 2200 may perform power factor correction of the system according to the balancing control.

The power control device (2000, 2000_1, 2000_2, 2000_3, 2000_4) according to an embodiment of the present disclosure may be applied to home appliances; however, the present disclosure is not limited thereto. The power control device (2000, 2000_1, 2000_2, 2000_3, 2000_4) according to an embodiment of the present disclosure may be an interleaved boost PFC power control device and may be applied to various electric appliances including household appliances. The power control device (2000, 2000_1, 2000_2, 2000_3, 2000_4) according to an embodiment of the present disclosure may be applied not only to air conditioners and/or air conditioner outdoor units but also to server power and electric vehicle slow chargers. Also, the power control device (2000, 2000_1, 2000_2, 2000_3, 2000_4) according to an embodiment of the present disclosure may include, but is not limited to, an air conditioner, a washing machine, a dryer, an electric light, a TV, a heating device, and a styler. The heating device may include, but is not limited to, a smart kettle, a teapot, a coffee pot, an induction device, a toaster, an air fryer, a highlighter, and a rice cooker.

Not all of the components illustrated in the power control device (2000, 2000_1, 2000_2, 2000_3, 2000_4) according to an embodiment of the present disclosure are essential components. The power control device (2000, 2000_1, 2000_2, 2000_3, 2000_4) may include more or less components than the illustrated components. Throughout the present disclosure, the power control device (2000, 2000_1, 2000_2, 2000_3, 2000_4) may be referred to as an interleaved boost PFC power control device, a household appliance, a home appliance, a cooking appliance, or an electric device, and these terms may be used interchangeably or replaceably with each other. Also, throughout the present disclosure, the electric appliance including the power control device (2000, 2000_1, 2000_2, 2000_3, 2000_4) may be an independently sold household appliance or may be a device constituting some product of a household appliance.

Although the interleaved boost PFC power control device (2000, 2000_1, 2000_2, 2000_3, 2000_4) throughout the present disclosure is illustrated and described as an interleaved boost PFC power control device including two legs, the interleaved boost PFC power control device (2000, 2000_1, 2000_2, 2000_3, 2000_4) for balancing control according to an embodiment of the present disclosure may also be similarly applied to an interleaved boost PFC power control device including three or more legs.

By the current sampling method according to the present disclosure, precise current detection may be performed by sampling the current value for balancing control only once per switching cycle, and thus, digital control with simplified current sampling may be performed and therefore a high-performance microcomputer may not be used.

Some embodiments of the present disclosure may also be implemented in the form of computer-readable recording mediums including instructions executable by computers, such as program modules executed by computers. The computer-readable recording mediums may be any available mediums accessible by computers and may include both volatile and non-volatile mediums and detachable and non-detachable mediums. Also, the computer-readable recording mediums may include computer storage mediums and communication mediums. The computer storage mediums may include both volatile and non-volatile and detachable and non-detachable mediums implemented by any method or technology for storage of information such as computer-readable instructions, data structures, program modules, or other data. The communication mediums may include any information transmission medium and may include other transmission mechanisms or other data of modulated data signals such as computer-readable instructions, data structures, program modules, or carriers. Also, some embodiments of the present disclosure may be implemented as computer programs or computer program products including instructions executable by computers, such as computer programs executed by computers.

The machine-readable storage medium may be provided in the form of a non-transitory storage medium. Here, the term "non-transitory storage medium" may mean that the storage medium is a tangible device and does not include signals (e.g., electromagnetic waves), and may mean that data may be semipermanently or temporarily stored in the storage medium. For example, the "non-transitory storage medium" may include a buffer in which data is temporarily stored.

According to an embodiment, the method according to various embodiments of the present disclosure may be included and provided in a computer program product. The computer program product may be traded as a product between a seller and a buyer. The computer program product may be distributed in the form of a machine-readable storage medium (e.g., a compact disc read only memory (CD-ROM)) or may be distributed (e.g., downloaded or uploaded) online through an application store or directly between two user devices (e.g., smartphones). In the case of online distribution, at least a portion of the computer program product (e.g., a downloadable app) may be at least temporarily stored or temporarily generated in a machine-readable storage medium such as a memory of a manufacturer server, a memory of an application store server, or a memory of a relay server.

## Claims

1. A power control device (2000) comprising:

   a rectifier (20) configured to rectify an input current;
   a first switch (33_1) and a second switch (33_2) connected to an output of the rectifier (20) to control a phase of the output of the rectifier (20);
   a first current sensor (38_1) configured to sense a current through the first switch (33_1) and a second current sensor (38_2) configured to sense a current through the second switch (33_2);
   a low pass filter (712) configured to filter the current sensed by the first current sensor (38_1) and the current sensed by the second current sensor (38_2); and
   at least one processor (2200) configured to sample the currents filtered by the low pass filter (712) once per entire switching cycle of the first switch (33_1) and the second switch (33_2) and perform balancing control based on the sampled currents such that an average value of the current through the first switch (33_1) and the current through the second switch (33_2) is uniform for a certain period.

2. The power control device of claim 1, wherein a current value of the current filtered by the low pass filter has a uniform value within a certain deviation value in the switching cycle.

3. The power control device of any one of claims 1 to 2, wherein the at least one processor is further configured to perform power factor correction according to the balancing control.

4. The power control device of any one of claims 1 to 3, wherein the at least one processor is further configured to simultaneously obtain an average value per switching cycle of a current flowing through the first switch and a current flowing through the second switch by sampling the filtered current once per switching cycle of the first switch and the second switch.

5. The power control device of any one of claims 1 to 4, further comprising:

   an output current sensor (38_3) configured to sense an output current of the rectifier (20);

a direct current (DC) link capacitor (40) configured to smooth an output voltage of the rectifier (20); and
a voltage sensor (60) configured to sense a voltage across the DC link capacitor (40), wherein the output current of the rectifier (20) and the voltage across the DC link capacitor (40) are input to a controller, and the at least one processor (2200) controls switching of the first switch (33_1) and the second switch (33_2) through an output of the controller.

6. The power control device of any one of claims 1 to 5, further comprising an input current sensor configured to detect the input current,
wherein the at least one processor is further configured to obtain a harmonic component from the input current detected by the input current sensor, determine a non-conducting period size of the first switch and the second switch such that the obtained harmonic component is less than a certain harmonic reference value, and generate a current command value corresponding to the determined non-conducting period size.

7. The power control device of claim 6, wherein the generating of the current command value corresponding to the determined non-conducting period size comprises outputting a current shape command value corresponding to the current command value based on the determined non-conducting period and a phase difference between the input current and an input voltage of a system.

8. The power control device of claim 6, wherein the at least one processor is further configured to perform control such that the obtained harmonic component is less than a certain harmonic reference value and the non-conducting period size of the first switch and the second switch is maximized.

9. The power control device (2000) of any one of claims 1 to 4, further comprising:

a DC link capacitor (40) configured to smooth an output voltage of the rectifier (20); and
a power factor correction (PFC) converter including at least two legs (301, 302) connected in parallel to the DC link capacitor (40),
wherein one of the at least two legs (301, 302) includes the first switch (33_1) and another one includes the second switch (33_2), and
the at least one processor (2200) is further configured to randomly selects at least one of the at least two legs (301, 302) and turns on/off the first switch (33_1) or the second switch (33_2) included in the randomly-selected at least one leg according to a pulse width modulation (PWM) switching signal.

10. The power control device (2000) of any one of claims 1 to 4, further comprising:

a DC link capacitor (40) configured to smooth an output voltage of the rectifier (20); and
a PFC converter including at least two legs (301, 302) connected in parallel to the DC link capacitor (40),
wherein one of the at least two legs (301, 302) includes the first switch (33_1) and another leg includes the second switch (33_2), and
the at least one processor (2200) is further configured to sequentially select the at least two legs (301, 302) and turns on/off the first switch (33_1) or the second switch (33_2) included in the selected at least one leg among the at least two legs according to a PWM switching signal.

11. The power control device of any one of claims 1 to 10, wherein the sampling of the current filtered by the low pass filter once per switching cycle of the first switch and the second switch comprises sampling the current at any point in the switching cycle.

12. The power control device of any one of claims 1 to 11, wherein a cutoff frequency of the low pass filter is set to be 1/10 or less of a switching frequency of the first switch or the second switch.

13. The power control device (2000) of any one of claims 1 to 4, further comprising a DC link capacitor (40) configured to smooth an output voltage of the rectifier (20),

wherein at least a portion of the rectifier comprises a switching device (21, 22),
wherein the at least one processor (2200) is further configured to control the switching device (21, 22) of the rectifier (20) to gradually increase a size of a charge voltage charged into the DC link capacitor (40) when a system including the power control device operates.

**14.** The power control device of claim 13, wherein at least a portion of the switching device of the rectifier comprises a thyristor.

**15.** A power control method of a power control device, the power control method comprising:

rectifying, by a rectifier, an input current of a system including the power control device (1410);
sensing, by a current sensor, a current through each of a first switch and a second switch connected to an output of the rectifier (1420);
filtering the sensed currents through a low pass filter (1430);
sampling, by at least one processor, the filtered current once per switching cycle of the first switch and the second switch (1440); and
performing balancing control based on the sampled current such that an average value of the current through the first switch and the current through the second switch is uniform for a certain period (1450).

# FIG. 1

EP 4 546 632 A1

# FIG. 2

# FIG. 3A

# FIG. 3B

CONTROLLER 70

- $V_{ref}$, $V_{DC}$ → (−/+) summer → VOLTAGE CONTROLLER 701
- → ($\times$) multiplier ← $V_{in}$
- → $i^*$ → (−/+) summer ← $i_{PFC}$
- → CURRENT CONTROLLER 703
- → $d^*$ → BALANCING CONTROLLER 721 ← $i_2$, $i_1$
- → PWM1, PWM2

# FIG. 3C

# FIG. 4

# FIG. 5

# FIG. 6

EP 4 546 632 A1

# FIG. 7

LEG CURRENT
SENSING CIRCUIT          711

LOW PASS
FILTER          712

$i_1$

$i_2$

721

CURRENT
BALANCING
CORRECTION
SIGNAL

BALANCING
CONTROLLER

# FIG. 8A

# FIG. 8B

FIRST SWITCH
REFERENCE
SAMPLING TIME

FIRST SWITCH
GATE SIGNAL

FIRST
SWITCH
CURRENT

SECOND
SWITCH
GATE SIGNAL

$t_s$

SECOND
SWITCH
CURRENT

PHYSICAL MEANINGS ARE DIFFERENT
BETWEEN SECOND SWITCH AND FIRST SWITCH
(FIRST SWITCH CURRENT CORRESPONDS TO
ON-CYCLE AVERAGE, AND SECOND SWITCH CURRENT
CORRESPONDS TO ON-CYCLE MINIMUM VALUE)

# FIG. 8C

FIRST SWITCH REFERENCE SAMPLING TIME

FIRST SWITCH CURRENT

FIRST SWITCH GATE SIGNAL

SECOND SWITCH CURRENT

SECOND SWITCH GATE SIGNAL

$t_{S1}$

FIRST SWITCH CURRENT SENSING TIME

$t_{S2}$

SECOND SWITCH CURRENT SENSING TIME

# FIG. 8D

FIRST SWITCH
REFERENCE
SAMPLING TIME

FIRST SWITCH
GATE SIGNAL

FIRST SWITCH
CURRENT

FIRST SWITCH
CURRENT
AVERAGE VALUE

SECOND
SWITCH CURRENT

SECOND SWITCH
CURRENT
AVERAGE VALUE

$t_S$

FIRST/SECOND SWITCH
CURRENT AVERAGE
VALUE SENSING TIME

SECOND SWITCH
GATE SIGNAL

# FIG. 9A

LEG 2 OPERATES     LEG 1 OPERATES

(A)

LEG 2 OPERATES     LEG 1 OPERATES

LEG 2 CURRENT

LEG 1 CURRENT AND LEG 2 CURRENT

(B)

INPUT CURRENT

EP 4 546 632 A1

# FIG. 9B

LEG 2 OPERATES | LEG 1 OPERATES

(A)

LEG 1 AND LEG 2 OPERATE | ONLY LEG 1 OPERATES

LEG 1 CURRENT

LEG 1 CURRENT AND LEG 2 CURRENT

(B)

INPUT CURRENT

EP 4 546 632 A1

# FIG. 10A

# FIG. 10B

T1:off T2:off | T1:on T2:off | T1:off T2:off | T1:off T2:on | T1:off T2:off | T1:on T2:off | T1:off T2:off | T1:off T2:on

T1 TRIGGER SIGNAL

T2 TRIGGER SIGNAL

OUTPUT CAPACITOR VOLTAGE($V_{DC}$)

$\Delta t1$    $\Delta t2$    $\Delta t3$    $\Delta t4$

[ INITIAL OPERATION ]

# FIG. 10C

| T1:off T2:off | T1:on T2:off | T1:off T2:off | T1:off T2:on | T1:off T2:off | T1:on T2:off | T1:off T2:off | T1:off T2:on |

T1 TRIGGER SIGNAL

T2 TRIGGER SIGNAL

OUTPUT CAPACITOR VOLTAGE(V$_{DC}$)

Δt5    Δt6    Δt7    Δt8

[ INTERMEDIATE OPERATION ]

# FIG. 10D

[ CAPACITOR CHARGE COMPLETION CONDITION ]

# FIG. 11

# FIG. 12

# FIG. 13

**DRIVER** — 2100

- EMI FILTER — 2111
- RECTIFIER CIRCUIT — 2112
- INVERTER CIRCUIT — 2113
- PFC CIRCUIT — 30
- LOW PASS FILTER — 712

**PROCESSOR** — 2200

**COMMUNICATION INTERFACE** — 2300

SHORT-RANGE WIRELESS COMMUNICATION INTERFACE — 2310

| Bluetooth | BLE |
| NFC/RFID | WLAN |
| ZIGBEE | Ant+ |
| Wi-Fi Direct | UWB |

LONG-RANGE COMMUNICATION INTERFACE — 2320

— 2000

**SENSOR UNIT** — 2400

- CURRENT SENSOR — 1600
- INPUT VOLTAGE SENSOR — 11
- DC LINK VOLTAGE SENSOR — 60

**OUTPUT INTERFACE** — 2500

- DISPLAY UNIT — 2510
- AUDIO OUTPUT UNIT — 2520

**USER INPUT INTERFACE** — 2600

**MEMORY** — 2700

EP 4 546 632 A1

# FIG. 14

START

RECTIFY INPUT CURRENT OF SYSTEM BY RECTIFIER ——1410

SENSE CURRENT CONDUCTED THROUGH EACH OF
FIRST SWITCH AND SECOND SWITCH
CONNECTED TO OUTPUT OF RECTIFIER ——1420

FILTER SENSED CURRENT THROUGH LOW PASS FILTER ——1430

SAMPLE FILTERED CURRENTS ONCE PER ENTIRE
SWITCHING CYCLE OF FIRST SWITCH AND SECOND SWITCH ——1440

PERFORM BALANCING CONTROL BASED ON SAMPLED
CURRENTS SUCH THAT AVERAGE VALUE OF CURRENT
THROUGH FIRST SWITCH AND CURRENT THROUGH
SECOND SWITCH IS UNIFORM FOR CERTAIN PERIOD ——1450

END

## INTERNATIONAL SEARCH REPORT

| International application No. |
| --- |
| **PCT/KR2023/004809** |

| A. | CLASSIFICATION OF SUBJECT MATTER |
| --- | --- |

**H02M 3/157**(2006.01)i; **H02M 3/158**(2006.01)i; **H02M 1/00**(2007.01)i; **H02M 1/42**(2007.01)i

According to International Patent Classification (IPC) or to both national classification and IPC

| B. | FIELDS SEARCHED |
| --- | --- |

Minimum documentation searched (classification system followed by classification symbols)

H02M 3/157(2006.01); G05F 1/59(2006.01); H02M 1/00(2007.01); H02M 1/42(2007.01); H02M 3/155(2006.01); H02M 3/158(2006.01); H02M 7/12(2006.01); H02P 27/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전력 제어 회로(power control circuit), 정류부(rectification member), 저역 통과 필터(low pass filter), 밸런싱(balancing)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2024606 B1 (LG ELECTRONICS INC.) 24 September 2019 (2019-09-24)<br>See paragraphs [0011]-[0015] and [0028]-[0098] and figures 1-8. | 1-3,15 |
| A | JP 6358397 B2 (SANKEN ELECTRIC CO., LTD.) 18 July 2018 (2018-07-18)<br>See paragraphs [0013]-[0063] and figures 1-5. | 1-3,15 |
| A | JP 2008-154377 A (TOYOTA INDUSTRIES CORP.) 03 July 2008 (2008-07-03)<br>See claims 1-4 and figures 1-5. | 1-3,15 |
| A | US 9240712 B2 (POWER SYSTEMS TECHNOLOGIES, LTD.) 19 January 2016 (2016-01-19)<br>See claims 1-12 and figures 3-6. | 1-3,15 |
| A | CN 108718152 A (GUANGDONG MIDEA REFRIGERATION EQUIPMENT CO., LTD. et al.) 30 October 2018 (2018-10-30)<br>See paragraphs [0045]-[0087] and figures 1-6. | 1-3,15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 July 2023** | **24 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004809**

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
   because they relate to subject matter not required to be searched by this Authority, namely:

2. ☑ Claims Nos.: **7-8,14**
   because they relate to parts of the international application that do not comply with the prescribed requirements to such an extent that no meaningful international search can be carried out, specifically:

   Claims 7-8 and 14 refer to claims violating PCT Rule 6.4(a), and thus are considered to be unclear claims.

3. ☑ Claims Nos.: **4-6,9-13**
   because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.

**PCT/KR2023/004809**

| Patent document cited in search report | | | Publication date (day/month/year) | Patent family member(s) | | | Publication date (day/month/year) |
|---|---|---|---|---|---|---|---|
| KR | 10-2024606 | B1 | 24 September 2019 | KR | 10-2018-0136268 | A | 24 December 2018 |
| JP | 6358397 | B2 | 18 July 2018 | JP | WO2017-009950 | A1 | 12 October 2017 |
| | | | | US | 10038366 | B2 | 31 July 2018 |
| | | | | US | 2017-0310209 | A1 | 26 October 2017 |
| | | | | WO | 2017-009950 | A1 | 19 January 2017 |
| JP | 2008-154377 | A | 03 July 2008 | | None | | |
| US | 9240712 | B2 | 19 January 2016 | CN | 103872895 | A | 18 June 2014 |
| | | | | DE | 102013107472 | A1 | 18 June 2014 |
| | | | | US | 2014-0169049 | A1 | 19 June 2014 |
| CN | 108718152 | A | 30 October 2018 | CN | 108718152 | B | 11 December 2020 |

Form PCT/ISA/210 (patent family annex) (July 2022)